# EUROPÄISCHE PATENTSCHRIFT

(11) **EP 3 705 802 B1**
(45) Veröffentlichungstag und Bekanntmachung des Hinweises auf die Patenterteilung: **31.01.2024**
(21) Anmeldenummer: 20161531.7
(22) Anmeldetag: 06.03.2020
(51) Int. Cl.: F24F 13/24, F24F 13/20

(54) **SCHALLDÄMMANORDNUNG**
SOUND INSULATION ASSEMBLY
AGENCEMENT D'ISOLATION ACOUSTIQUE

(30) Priorität: 08.03.2019 DE 102019105934
(43) Veröffentlichungstag der Anmeldung: 09.09.2020
(73) Patentinhaber: Kämpf, Thomas, 74219 Möckmühl-Züttlingen (DE)
(72) Erfinder: Kämpf, Thomas, 74219 Möckmühl-Züttlingen (DE)
(74) Vertreter: Hoeger, Stellrecht & Partner Patentanwälte mbB

(56) Entgegenhaltungen:
- WO-A1-2014/135960
- DE-A1- 19 539 811
- DE-A1-102014 008 379
- GB-A- 2 413 172
- US-A1- 2006 104 027

## Beschreibung

Die vorliegende Erfindung betrifft eine Schalldämmanordnung zur im Wesentlichen vollständigen Aufnahme einer oder mehrerer Wärmetauscherkomponenten aus den Bereichen der Kälte- und Klimatechnik.

Wärmetauscherkomponenten der eingangs genannten Art sind vielfältig im Einsatz, beispielsweise in der Klimatechnik für Gebäude oder im Bereich der Geothermie.

Typischerweise sind die Wärmetauscherkomponenten zur Kühlung mit Frischluft im Freien aufgestellt und müssen deshalb vor Witterungseinflüssen geschützt werden. Des Weiteren sind Schalldämmmaßnahmen erforderlich, um die Schallemission der Wärmetauscherkomponenten zu reduzieren.

Hierfür wurden im Stand der Technik entsprechende Schallschutzanordnungen mit einem Schallschutzgehäuse vorgeschlagen, in denen die Wärmetauscherkomponente aufgenommen wird und die gleichzeitig Zuluft- und Abluftströme zu bzw. von der Wärmetauscherkomponente von bzw. zur Umgebung bereitstellen. Ein Beispiel hierfür ist in der EP 3 147 582 A1 beschrieben, bei dem in einem Zuluftals auch in einem Abluftkanal zur Schalldämmung jeweils sogenannte Lammellenpakete mit dort ausgebildeten Schallabsorptionsflächen angeordnet sind.

Nachteilig bei diesen Schallschutzanordnungen ist, dass aufgrund der Einbauten in Form der Lamellenpakete die Querschnitte der Zuluft- und Abluftkanäle reduziert wird, was in der Folge bei gleicher Kühlleistung mit höheren Luftströmungsgeschwindigkeiten ausgeglichen werden muss. Höhere Luftströmungsgeschwindigkeiten wiederum haben zur Folge, dass nicht nur der Energieverbrauch steigt, sondern, dass ein Teil der angestrebten Schalldämmwirkung wieder verloren geht.

Aus dem US-Patent US 2006/0104027 A1 ist eine Gehäuseanordnung für Computer-Hardware bekannt, bei welcher Seitenwände ein Gehäuse definieren, welches einen Lufteinlass und einen Luftauslass aufweist. Die Gehäuseanordnung umfasst einen Ventilator, mit dessen Betrieb ein Luftstrom in das Gehäuse hinein und ein Luftstrom aus diesem heraus erzeugt werden, so dass Wärme der Computer-Hardware transferiert werden kann. Die Gehäuseanordnung umfasst auch eine Anordnung zur Schallreduzierung, welche einen umgelenkten Pfad umfasst, durch welchen die Luft, die durch den Lufteinlass eintritt und durch den Luftauslass austritt hindurchfließt. Der umgelenkte Pfad ist so konfiguriert, dass Schall, der von dem Ventilator erzeugt wird und in den umgelenkten Pfad eintritt, verteilt wird, um so die Intensität des Schalls, der aus dem Pfad austritt, minimiert wird.

Die deutsche Offenlegungsschrift DE 10 2014 008 379 A1 beschreibt eine Schallschutz-Einhausung mit einer schalldämmenden Außenhülle, welche einen Innenraum der Schallschutz-Einhausung umschließt und eine erste und eine zweite Einhausungsöffnung aufweist, durch die der Innenraum der Schallschutz-Einhausung mit der Umgebung in Verbindung steht. Die Außenhülle umschließt den Innenraum bis auf die Einhausungsöffnungen vollständig. Eine luftdurchlässige Abtrennung ist zwischen einem ersten Innenraumbereich und einem zweiten Innenraumbereich der Schallschutz-Einhausung vorgesehen. Eine erste Einhausungsöffnung verbindet den ersten Innenraumbereich mit der Umgebung der Schallschutz-Einhausung, und der zweite Innenraumbereich wird durch die zweite Einhausungsöffnung mit der Umgebung der Schallschutz-Einhausung verbunden. Der erste Innenraumbereich steht ausschließlich über eine luftdurchlässige Öffnung der Abtrennung mit dem zweiten Innenraumbereich in Verbindung. Im ersten Innenraumbereich ist in einem vorgegebenen Abstand von der ersten Einhausungsöffnung eine erste flächige Abschirmung vorgesehen, und im zweiten Innenraumbereich ist in einem zweiten vorbestimmten Abstand von der zweiten Einhausungsöffnung eine zweite flächige Abschirmung angeordnet.

In der deutschen Offenlegungsschrift DE 195 39 811 A1 ist eine Lüftungsvorrichtung mit einem Gehäuse beschrieben, welches einen Ventilator und einen Wärmetauscher sowie Öffnungen für den Eintritt beziehungsweise den Austritt der mittels des Ventilators geförderten Luft umfasst. Diese Öffnungen sind mittels Klappen bedarfsweise freigebbar oder absperrbar. Die Lüftungsvorrichtung weist zwischen einem Boden und einer Decke des Gehäuses wenigstens einen Zwischenboden auf, mit welchem ein Saugbereich von einem Druckbereich getrennt wird. Im Bereich einer Öffnung des Zwischenbodens ist der Ventilator angeordnet, welcher insbesondere als rückwärts gekrümmter Radialventilator ausgebildet ist.

Die internationale Patentanmeldung WO 2014/135960 A1 betrifft eine aktive Überströmanordnung zur Erzeugung eines Luftausgleichs zwischen zwei durch eine Trennwand voneinander getrennten Räumen. Die Anordnung weist auf: einen Trennwand-Abschnitt, der mit mindestens einem Durchgangsloch versehen ist, welches sich von einer ersten Wandöffnung auf der ersten Seite des Trennwand-Abschnitts zu einer zweiten Wandöffnung auf der zweiten Seite des Trennwand-Abschnitts erstreckt; einen in dem mindestens einen Durchgangsloch angeordneten Ventilator; mindestens eine Schalldämpfeinheit, welche auf der ersten Wandöffnung und/oder auf der zweiten Wandöffnung dicht anliegend derart angeordnet ist, dass ein Überströmkanal für Luft zwischen den beiden Räumen vorliegt, der durch die mindestens eine Schalldämpfeinheit und durch das mindestens eine Durchgangsloch gebildet ist. Die mindestens eine Schalldämpfeinheit hat einen durchgängigen Luftkanal mit einem ersten Kanalabschnitt, einem Umlenkabschnitt und einem zweiten Kanalabschnitt, wobei sich der erste Kanalabschnitt im Wesentlichen parallel zur Ebene der Trennwand von einer Wandöffnung bis zu dem Umlenkabschnitt erstreckt und sich der zweite Kanalabschnitt im Wesentlichen parallel zur Ebene der Trennwand oder im Wesentlichen orthogonal zur Ebene der Trennwand von dem Umlenkabschnitt bis zu einer raumseitigen Austrittsöffnung der mindestens einen Schalldämpfeinheit erstreckt.

In der britischen Patentanmeldung GB 241 3172 A ist ein Gehäuse für eine Kühlvorrichtung oder eine Klimaanlage beschrieben, wobei das Gehäuse mindestens einen Kompressor und mindestens einen Kondensator aufweist. Das Gehäuse weist mindestens einen Lufteinlassweg mit mindestens zwei Lufteinlass-Kanälen auf, welche voneinander mit einer Schall-isolierenden Wand getrennt sind, eine Lufteinlass-Kammer stromab von den Lufteinlass-Kanälen und einen darauffolgenden Lufteinlass-Durchgang auf, welcher so ausgebildet ist, dass er einen Wechsel der Richtung des Luftflusses gegenüber der Richtung der ursprünglichen Lufteinlass-Kanäle bewirkt. Ein Ventilator kann Luft durch den Kondensator hindurch ansaugen. Aus dem Ventilator austretende Luft wird zu einem Auslasskanal und einer Auslass-Kammer geführt. Der Auslasskanal wechselt seine Richtung und mündet in zwei Auslasskanäle bevor die Luft in die Umgebung ausströmt.

Aufgabe der vorliegenden Erfindung ist es eine Schalldämmanordnung vorzuschlagen, bei der neben einem guten Schutz gegenüber Witterungseinflüssen eine möglichst ungehinderte Strömung der Zu- und Abluft gewährleistet ist, ohne dass geringere Effekte bei der Schalldämmung resultieren.

Diese Aufgabe wird im Rahmen der vorliegenden Erfindung durch eine Schalldämmanordnung mit den Merkmalen des Anspruchs 1 gelöst.

Die erfindungsgemäße Schalldämmanordnung umfasst zunächst ein an seiner Oberseite geschlossenes Gehäuse mit einem Innenraum für die Aufnahme der Wärmetauscherkomponente(n). Damit wird insbesondere eine Aufstellung der erfindungsgemäßen Schalldämmanordnung im Freien ohne weitere Vorkehrungen möglich, da mit der geschlossenen Oberseite ein guter Witterungsschutz gegeben ist. Ein Schallaustritt durch die Oberseite der erfindungsgemäßen Schalldämmanordnung kann damit im Wesentlichen unterdrückt werden.

Das Gehäuse weist einen Einlass für Zuluft und einen Auslass für Abluft auf, wobei in dem Gehäuse ein Zuluftkanal ausgebildet ist, der einen Zuluftstrom vom Einlass zu einer Zuluftkammer des Innenraums des Gehäuses unter mindestens zweimaliger Umlenkung führt. Entsprechend ist in dem Gehäuse ein Abluftkanal ausgebildet, der einen Abluftstrom von einer Abluftkammer im Innenraum des Gehäuses zum Auslass unter mindestens einmaliger Umlenkung führt.

Typischerweise wird ein Sockel für die Aufstellung und Montage der Wärmetauscherkomponente bereitgestellt, auf den auch das Gehäuse der erfindungsgemäßen Schalldämmanordnung montiert werden kann. Der Sockel kann somit Teil der Schalldämmanordnung bilden oder aber auch separat am Aufstellungsort für die Wärmetauscherkomponente bereits vorgesehen sein. Vorzugsweise werden über den Bereich des Sockels die Versorgungsleitungen, wie zum Beispiel für Kältemittel und Strom, sowie die entsprechenden Anschlüsse für die Wärmetauscherkomponente bereit gestellt. Weiter bevorzugt wird das Gehäuse der erfindungsgemäßen Schalldämmanordnung mit einer vibrationsdämpfend, beispielsweise unter Verwendung gummielastischer Materialien, mit dem Sockel verbunden.

Der Zuluft- und auch der Abluftauslass werden im oberen Drittel des Gehäuses, und damit deutlich beabstandet von dessen Unterseite angeordnet, so dass der Zuluftstrom und der Abluftstrom über eine ausgedehnte Strecke im Gehäuse zur Verbesserung der Schalldämmung in vertikaler Richtung geführt werden kann. Der Zuluft- und gegebenenfalls der Abluftkanal erstrecken sich bevorzugt über ca. die halbe Höhe des Gehäuses oder mehr.

Da Einlassöffnungen der Wärmetauscherkomponente ebenso wie deren Auslassöffnungen in der Regel ebenfalls von der Unterseite oder Standfläche beabstandet sind, kann häufig über eine weitere Umlenkung der Zu- bzw. gegebenenfalls auch der Abluftströme ein weiterer Schalldämmeffekt erzielt werden, ohne dass strömungshemmende Einbauten in den jeweiligen Strömungskanälen erforderlich sind. Damit lassen sich große Volumina im Zuluft- und Abluftbereich mit vergleichsweise geringen Strömungsgeschwindigkeiten realisieren, was zu einer weiter verbesserten Schallreduktion genutzt werden kann.

Die Zuluftkammer und die Abluftkammer sind im Innenraum räumlich voneinander getrennt ausgebildet. Im eingebauten Zustand einer Wärmetauscherkomponente im Gehäuse der erfindungsgemäßen Schalldämmanordnung steht ein Zulufteinlass der Wärmetauscherkomponente mit der Zuluftkammer und ein Abluftauslass der Wärmetauscherkomponente mit der Abluftkammer des Gehäuses in Fließverbindung, vorzugweise grenzen der Zulufteinlass und der Abluftauslass im Wesentlichen direkt an die Zuluftkammer bzw. die Abluftkammer an und sind mit diesen insbesondere jeweils dichtend verbunden.

Überraschenderweise hat sich im Rahmen der vorliegenden Erfindung herausgestellt, dass mit einer mindestens zweimaligen Umlenkung des Zuluftstroms und einer mindestens einmaligen Umlenkung des Abluftstroms ein guter Schalldämmeffekt erzielbar ist und insbesondere auf den freien Querschnitt der Strömungskanäle vermindernde Einbauten, wie z.B. die im Stand der Technik empfohlenen Lamellenpakete verzichtet werden kann.

Das Gehäuse der erfindungsgemäßen Schalldämmanordnung kann allseitig geschlossen sein, sodass es separat und ohne weitere Modifikation für die Aufnahme einer Wärmetauscherkomponente verwendbar ist. Darüber hinaus kann das Gehäuse so ausgebildet sein, dass es als Einheit mit einem weiteren oder mehreren Gehäusen seitlich aneinanderreihbar ist, um eine Skalierung der erfindungsgemäßen Schalldämmanordnung, insbesondere für die Aufnahme mehrerer oder größerer Wärmetauscherkomponenten, zu ermöglichen. Im Inneren solcher aneinandergereihten Gehäuse wird vorzugsweise zwischen den aneinandergereihten Innenräumen der Gehäuseeinheiten, in denen jeweils eine Wärmetauscherkomponente angeordnet ist, eine Wand vorgesehen, sodass die Innenräume der einzelnen Wärmetauscherkomponenten voneinander strömungstechnisch getrennt sind.

Insbesondere kann vorgesehen sein, dass das Gehäuse der erfindungsgemäßen Schalldämmanordnung als Ganzes von dem Sockel trennbar ist, beziehungsweise auf diesen aufsetzbar ausgestaltet ist, sodass dieses vormontiert über einen bereits auf dem Sockel montierten Wärmetauscherkomponente aufgesetzt werden kann.

Bevorzugt werden im überwiegenden Teil der Seitenwände, gegebenenfalls auch alle Seitenwände des Gehäuses mit einem Türelement ausgebildet, sodass ein vielseitiger, gegebenenfalls sogar ein allseitiger Zugang insbesondere für eine Inspektion und/oder Reparatur der Wärmetauscherkomponenten möglich ist.

Die Höhe des Gehäuses der erfindungsgemäßen Schalldämmanordnung ist typischerweise größer als eine Dimension der Sockelfläche eines Gehäuses, welche häufig ungefähr quadratisch ausgebildet wird.

Vorzugsweise werden zumindest ein oder mehrere Oberflächenbereiche der Zuluft- und/oder Abluftkanäle mit einer Schalldämmschicht ausgerüstet, wodurch eine weitere Schalldämmwirkung erzielt werden kann, ohne dass eine merkliche Verminderung des Querschnitts der Zuluft- und/oder Abluftkanäle in Kauf genommen werden muss.

Bevorzugt wird die Schalldämmschicht mehrlagig ausgebildet und umfasst beispielsweise neben einer ersten Lage aus einer sogenannten Schwerfolie eine weitere Lage aus einer Dämmmatte, welche vorzugsweise eine strukturierte Oberfläche aufweist. Die strukturierte Oberfläche weist eine vorgegebene Rauigkeit auf, optional auch eine Noppenstruktur oder eine Pyramiden-ähnliche Struktur auf.

Geeignete Materialien für die Ausbildung der Schalldämmschicht sind beispielsweise sogenannte Weichschaumstoffe und Vliesmaterialien sowie Bitumenschwerfolien von der CELLOFOAM GmbH & Co. KG erhältlich. Solche Materialien sind unter der Marke CELLO^{®} erhältlich. Sie können einzeln, d.h. einlagig, oder auch mehrlagig, gegebenenfalls miteinander kombiniert, eingesetzt werden.

Vorzugsweise wird der Zuluftkanal so ausgebildet, dass er einen vertikal angeordneten Abschnitt umfasst. Dies hat zur Folge, dass der Zuluftstrom vom ZuluftEinlass des Gehäuses im Zuluftkanal einmal vertikal nach unten abgelenkt wird und so die Schalldämmwirkung verbessert wird. Mindestens eine weitere Umlenkung des Zuluftstroms kann beispielweise beim Eintritt des Zuluftstroms aus dem Zuluftkanal in die Zuluftkammer erfolgen.

Insbesondere ist bei der erfindungsgemäßen Schalldämmanordnung vorgesehen, dass eine Umlenkung des Zuluft- bzw. des Abluftstroms eine Änderung der Strömungsrichtung des jeweiligen Stroms um ca. 90° oder mehr beinhaltet. Damit lässt sich eine besonders gute Verbesserung der Schalldämmung erzielen.

Das Gehäuse der erfindungsgemäßen Schalldämmanordnung weist vorzugsweise einen im Wesentlichen quaderförmig ausgebildeten Grundkörper auf, der eine Skalierung des Gehäuses für die Aufnahme von einem oder mehreren Wärmetauscherkomponenten besonders einfach ermöglicht. Die Wärmetauscherkomponenten weisen ebenfalls typischerweise eine Quaderform auf.

Alternativ sind auch andere Gehäuseformen denkbar, beispielsweise eine Zylinderform oder dergleichen.

Vorzugsweise kann vorgesehen sein, dass bei einer erfindungsgemäßen Schalldämmanordnung das Gehäuse zwei oder mehr Einlässe für die Zuluft und/oder zwei oder mehr Auslässe für die Abluft umfasst. Damit lässt sich der Querschnitt der Ein- und/oder der Auslässe an das gewünschte Volumen des Zuluft- bzw. Abluftstroms einfach anpassen.

Darüber hinaus kann ein Einlass mehrere getrennte nebeneinander angeordnete Einlassöffnungen aufweisen. Dies macht die Bereitstellung von mehreren, insbesondere parallelen, gesonderten Zuluftkanälen von jeder der Einlassöffnungen des Gehäuses zur Zuluftkammer des Innenraums in einfacher Weise möglich. Damit lässt sich zum Einen der Querschnitt, der für den Zuluftstrom zur Verfügung steht, einfach an vorgegebene Anforderungen anpassen und/oder gegebenenfalls die mit einer Schalldämmschicht ausgerüsteten Oberflächen im Zuluftbereich vergrößern, ohne dass der für den Zuluftstrom verfügbare Querschnitt merklich vermindert werden müsste.

Vorzugsweise führt bei der erfindungsgemäßen Schalldämmanordnung von der Abluftkammer des Innenraums zu jedem Auslass des Gehäuses ein gesonderter Abluftkanal. Auch kann ein Auslass des Gehäuses mehrere getrennte nebeneinander angeordnete Auslassöffnungen aufweisen, zu denen bevorzugt parallele gesonderte Abluftkanäle führen können.

Auch hier bietet die Bereitstellung von mehreren, insbesondere parallelen, gesonderten Abluftkanälen von der Abluftkammer des Innenraums zu jedem Auslass des Gehäuses die Möglichkeit zum einen den Querschnitt, der für den Abluftstrom zur Verfügung steht, einfach an vorgegebene Anforderungen anzupassen und/oder gegebenenfalls die mit einer Schalldämmschicht ausgerüsteten Oberflächen im Abluftbereich zu vergrößern, ohne dass der für den Abluftstrom verfügbare Querschnitt merklich vermindert werden müsste.

Der vom Gehäuse der erfindungsgemäßen Schalldämmanordnung bereitgestellte Innenraum weist typischerweise ein Volumen auf, welches ca. 20 % oder mehr, weiter bevorzugt ca. 50% oder mehr größer ist als das Volumen, das die Wärmetauscherkomponente aufweist, beispielsweise ein doppeltes Volumen, sodass die Wärmetauscherkomponenten in dem Innenraum im Wesentlichen freistehend oder gegebenenfalls an eine Trennwand, die den Innenraum gegenüber der Abluftkammer abgrenzt, anliegend platziert werden kann.

Da die Abluftkammer im Inneren des Gehäuses oberhalb der Zuluftkammer angeordnet ist, wird die Trennwand mit einem vorgegebenen Abstand zur Oberseite der Wärmetauscherkomponente und parallel zur Oberseite des Gehäuses angeordnet, wobei die für solche Konstruktionen vorgesehene Wärmetauscherkomponente an ihrer Oberseite die Abluft ausbläst. Die Oberseite der Wärmetauscherkomponente wird dann mittels einem Dichtelement, beispielsweise einem sogenannten Segeltuchstutzen, mit einer entsprechenden Öffnung der Trennwand im Wesentlichen strömungsdicht verbunden.

Eine strömungsdichte Verbindung verlangt im Sinne der vorliegenden Erfindung nicht zwingend eine gasdichte Verbindung. Vielmehr ist es typischerweise ausreichend, wenn über die strömungsdichte Verbindung vermieden wird, dass sich der Zuluft- und der Abluftstrom merklich beeinflussen, wobei eine Leckrate auf ca. 10 % oder weniger, bezogen auf den Zuluftstrom zwischen Zuluft- und Abluftkammer, begrenzt werden sollte.

Bevorzugt wird bei der erfindungsgemäßen Schalldämmanordnung die Zuluftkammer und die Abluftkammer im Wesentlichen strömungsdicht mit dem in der oder den Wärmetauscherkomponente(n) ausgebildeten Strömungsweg(en) verbindbar ausgebildet.

Bei einer bevorzugten erfindungsgemäßen Schalldämmanordnung sind zwei Einlässe im Gehäuse einander gegenüberliegend, insbesondere in gegenüberliegenden Seitenwänden eines im Wesentlichen quaderförmig ausgebildeten Gehäusegrundkörpers ausgebildet.

Bei einer weiteren bevorzugten Ausführungsform werden bei der erfindungsgemäßen Schalldämmanordnung ebenso zwei Auslässe im Gehäuse einander gegenüberliegend, insbesondere in gegenüberliegenden Seitenwänden eines im Wesentlichen quaderförmig ausgebildeten Gehäusegrundkörpers angeordnet.

Gemäß einer weiter bevorzugten Ausführungsform der erfindungsgemäßen Schalldämmanordnung wird der Einlass und der Auslass bzw. die Einlässe und die Auslässe jeweils in verschiedenen Seitenwänden des im Wesentlichen quaderförmig ausgebildeten Gehäusegrundkörpers angeordnet.

Bei einer besonders einfach zu skalierenden erfindungsgemäßen Schalldämmanordnung werden der Einlass in einer ersten Seitenwand des Gehäusegrundkörpers ausgebildet und der Auslass in einer zweiten Seitenwand des Gehäusegrundkörpers ausgebildet, wobei die zweite Seitenwand der ersten Seitenwand gegenüberliegend angeordnet ist.

Bevorzugt wird das Gehäuse modular aufgebaut, wobei das Gehäuse eine oder mehrere Türen und/oder Wandsegmente umfasst, wobei einer oder mehrere der Einlässe und/oder einer oder mehrere der Auslässe in der einen oder mehreren der Türen und/oder den Wandsegmenten ausgebildet sind.

Bei besonders bevorzugten modular aufgebauten erfindungsgemäßen Schalldämmanordnungen sind die Türen und/oder Wandsegmente mit im Wesentlichen denselben Abmessungen in Höhe und Breite ausgebildet.

Häufig wird die erfindungsgemäße Schalldämmanordnung an der Unterseite des Gehäuses einen Sockel zur Platzierung der einen oder der mehreren Wärmetauscherkomponente(n) umfassen. Dies lässt besonders einfach eine exakte Ausrichtung der Wärmetauscherkomponente(n) zu der Zuluftkammer und der Abluftkammer und eine strömungsdichte Verbindung mit denselben zu.

Zum einfachen Skalieren der erfindungsgemäßen Schalldämmanordnung ist/sind der Auslass oder die Auslässe im Gehäuse oberhalb des Einlasses oder den Einlässen angeordnet.

Bevorzugt entspricht die Querschnittsfläche des Durchtritts vom Zuluftkanal zur Zuluftkammer ca. 50 % bis ca. 250 % der Querschnittsfläche des Zuluftkanals an dessen engster Stelle. Weiter bevorzugt entspricht diese Querschnittsfläche ca. 80 % bis ca. 150 %, am meisten bevorzugt ca. 90 % bis ca. 120 % der Querschnittsfläche des Zuluftkanals an dessen engster Stelle. Damit wird erreicht, dass die Strömungsgeschwindigkeit der Zuluft vom Einlass bis zum Eintritt in die Zuluftkammer ausreichend niedrig gehalten werden kann.

Bevorzugte Strömungsgeschwindigkeiten für die Zuluft betragen ca. 3 bis ca. 15 m/s, beispielsweise ca. 7 m/s, am engsten Querschnitt des Strömungswegs des Zuluftstroms vom Einlass bis zur Zuluftkammer gemessen. Der Druckabfall entlang dieses Strömungswegs wird vorzugsweise auf ca. 25 Pa oder weniger begrenzt.

Für die Abluft empfiehlt sich eine Strömungsgeschwindigkeit im Bereich von ca. 3 m/s bis ca. 20 m/s, am engsten Querschnitts des Strömungswegs der Abluft von der Abluftkammer bis zum Auslass gemessen.

Häufig wird bei der erfindungsgemäßen Schalldämmanordnung der Strömungsquerschnitt des Abluftkanals oder der Abluftkanäle an der engsten Stelle größer oder gleich dem Strömungsquerschnitt des Zuluftkanals oder der Zuluftkanäle ausgebildet. Diese Maßnahme stellt sicher, dass abluftseitig kein Überdruck aufgebaut wird.

Im Falle, dass abluftseitig eine höhere Ausblasgeschwindigkeit verlangt wird, kann der Querschnitt des Abluftkanals geringer gegenüber dem Querschnitt des Zuluftkanals gewählt werden.

Es hat sich herausgestellt, dass wenn der Zuluftkanal oder die Zuluftkanäle gleich lang oder länger ausgebildet ist/sind als der Abluftkanal oder die Abluftkanäle mit der erfindungsgemäßen Schalldämmanordnung mit wenig Aufwand eine besonders gute Schalldämmwirkung erzielt werden kann.

Für eine kompakte Ausbildung der erfindungsgemäßen Schalldämmanordnung wird die Abluftkammer im Innenraum des Gehäuses oberhalb der Zuluftkammer angeordnet. Diese Maßnahme begünstigt auch eine einfache und kostengünstige Skalierung, insbesondere dann wenn die Anordnung der Ein- und Auslässe wie zuvor beschrieben für die Skalierung günstig in dem Gehäuse platziert werden. Wie schon erwähnt ist es für Wartungsarbeiten günstig, wenn die erfindungsgemäße Schalldämmanordnung ein Gehäuse mit einer oder mehreren Türen umfasst, wobei optional einer oder mehrere der Einlässe und/oder einer oder mehrere der Auslässe in der einen oder den mehreren Türen ausgebildet sind.

Diese und weitere Vorteile der Erfindung werden im Folgenden anhand der Zeichnung noch näher erläutert. Es zeigen im Einzelnen:
- Figuren 1A bis 1E: eine erste Ausführungsform einer Schalldämmanordnung;
- Figuren 2A bis 2D: eine zweite Ausführungsform einer Schalldämmanordnung;
- Figuren 3A bis 3D: eine dritte Ausführungsform einer Schalldämmanordnung;
- Figuren 4A bis 4D: eine vierte Ausführungsform einer erfindungsgemäßen Schalldämmanordnung;
- Figuren 5A bis 5D: eine fünfte Ausführungsform einer erfindungsgemäßen Schalldämmanordnung;
- Figuren 6A bis 6D: eine sechste Ausführungsform einer erfindungsgemäßen Schalldämmanordnung;
- Figuren 7A bis 7D: eine siebte Ausführungsform einer Schalldämmanordnung;
- Figuren 8A bis 8D: eine achte Ausführungsform einer Schalldämmanordnung; und
- Figuren 9A bis 9D: eine neunte Ausführungsform, ähnlich der ersten Ausführungsform, in mehreren Varianten.

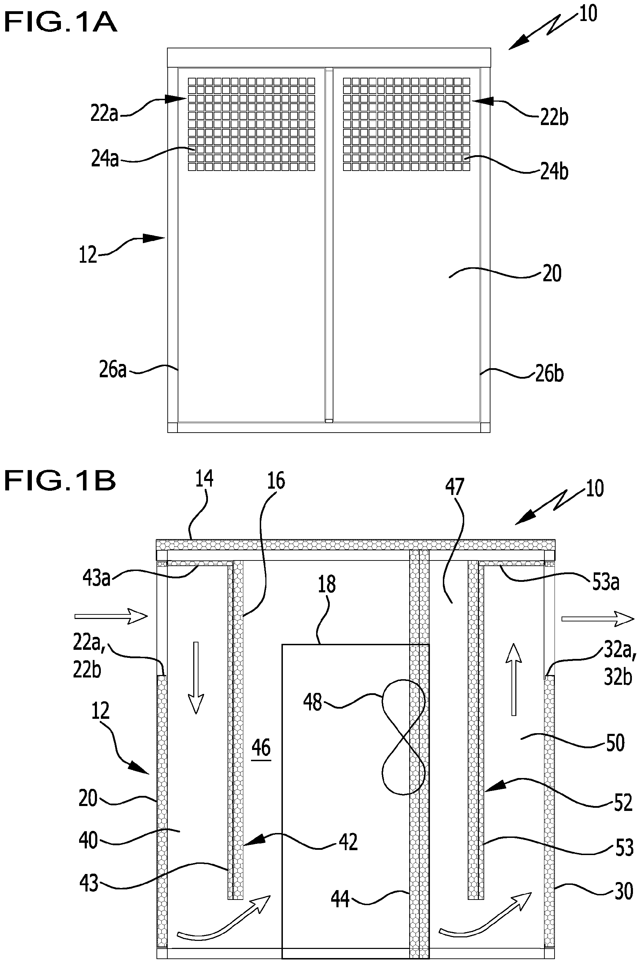

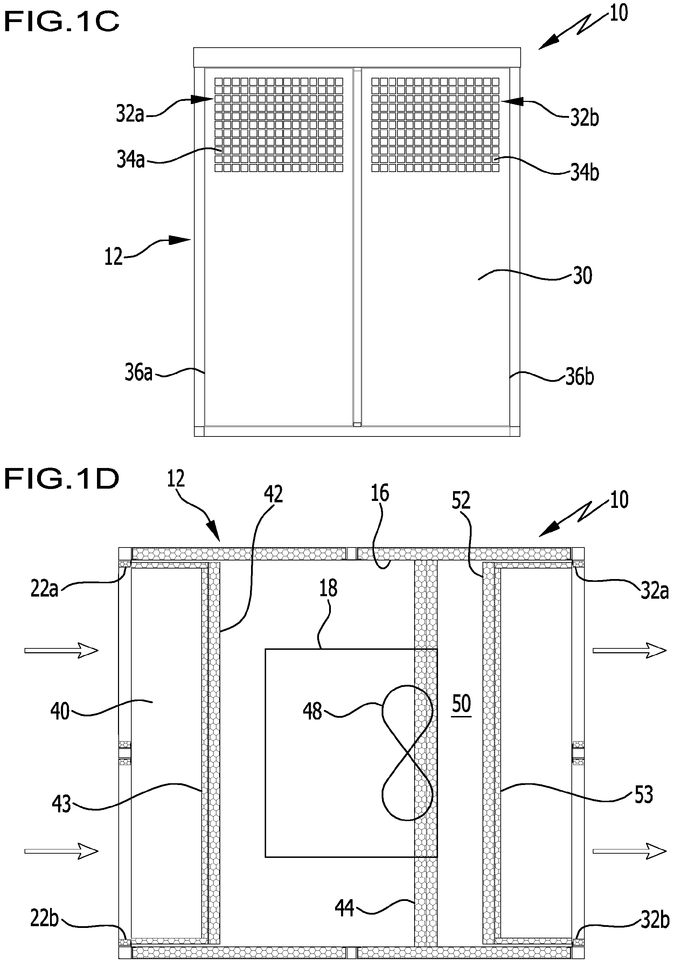

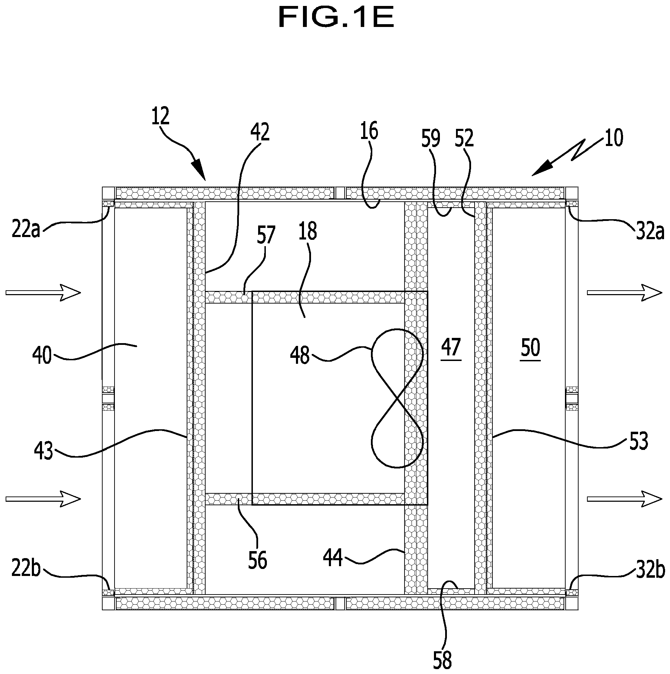

Figur 1 zeigt eine Schalldämmanordnung 10 mit einem quaderförmigen Gehäuse 12, welches an seiner Oberseite 14 geschlossen ist.

Das Gehäuse 12 bildet einen Innenraum 16 zur Aufnahme einer Wärmetauscherkomponente 18. Durch die geschlossene Oberseite 14 ist der Innenraum 16 vor Witterungseinflüssen geschützt.

Das Gehäuse 12 weist in einer ersten Seitenwand 20, die in Figur 1A in einer Seitenansicht dargestellt ist, zwei Einlassöffnungen 22a, 22b auf, die jeweils von einem Lüftungsgitter 24a, 24b abgedeckt sind.

Die Seitenwand 20 ist bei dieser Ausführungsform zweiteilig ausgebildet, wobei ein Teil oder auch beide Teile der Seitenwand 20 als Türelemente 26a, 26b ausgebildet sein können.

Das quaderförmige Gehäuse 12 weist auf einer der ersten Seitenwand 20 gegenüberliegenden Seitenwand 30 zwei Auslassöffnungen 32a, 32b auf, welche analog zu den Einlassöffnungen 22a, 22b über Lüftungsgitter 34a, 34b abgedeckt sind. Auf die Seitenwand 30 kann wiederum in Form von einer oder hier in diesem Ausführungsbeispiel gezeigt zwei Türen 36a, 36b ausgebildet sein, wie dies in Figur 1C im Einzelnen dargestellt ist.

Die Einlassöffnungen 22a, 22b und die Auslassöffnungen 32a, 32b sind im oberen Drittel der Seitenwände 20 beziehungsweise 30 angeordnet.

Jedoch zeigt diese Ausführungsform nicht die erfindungsgemäßen Merkmale, dass der Auslass im Gehäuse oberhalb des Einlasses angeordnet ist, und dass die Abluftkammer im Innenraum des Gehäuses oberhalb der Zuluftkammer angeordnet ist. H

Figur 1B zeigt einen vertikalen Querschnitt durch das Gehäuse 12 der Schalldämmanordnung 10 senkrecht zu den Seitenwänden 20, 30, wobei im Inneren des Gehäuses 12 auf Seiten der Seitenwand 20 ein Zuluftkanal 40 ausgebildet ist, der von den Einlassöffnungen 22a, 22b vertikal nach unten führt und so den über die Einlassöffnungen 22a, 22b eintretenden Zuluftstrom um 90° in vertikaler Richtung nach unten umlenkt. Der Zuluftkanal 40 wird von einer Kanalwand 42 gegenüber dem Innenraum 16 des Gehäuses 12 abgegrenzt, welche sich vertikal von der Oberseite 14 des Gehäuses 12 über die gesamte Breite der Seitenwand 20 nach unten erstreckt. Die Länge des Zuluftkanals 40 beträgt mehr als die halbe Höhe des Gehäuses 12.

Da die Länge der Kanalwand 42 geringer ist als die Höhe der Außenwand 20 verbleibt in dem unteren Bereich des Gehäuses 12 ein freier Querschnitt über den der Zuluftstrom erneut unter Umlenkung in die Zuluftkammer 46 des Innenraums 16 gelangen kann, in der auch die Wärmetauscherkomponente 18 aufgenommen ist.

Der Innenraum 16 des Gehäuses 12 ist mit einer Trennwand 44 unterteilt, die parallel zu den Seitenwänden 20 und 30 sowie auch der Kanalwand 42 angeordnet ist. Jenseits der Trennwand 44 ist eine Abluftkammer 47 ausgebildet. Die Trennwand 44 beinhaltet eine Öffnung (nicht dargestellt) im mittleren bis oberen Bereich des Gehäuses 12, die mit einer Auslassöffnung für Abluft der Wärmetauscherkomponente 18 (symbolisiert durch ein schematisch gezeichnetes Rotorblatt 48) verbunden ist.

Die Abluft aus der Wärmetauscherkomponente 18 wird von der Abluftkammer 47 und einem seitlich zur Trennwand 44 angeordneten Abluftkanal 50 aufgenommen, der von einer Kanalwand 52 begrenzt wird, die sich von der Oberseite 14 des Gehäuses 12 vertikal nach unten erstreckt und so den Abluftstrom in der Abluftkammer 47 zunächst vertikal nach unten leitet.

Die Erstreckung der Kanalwand 52 in Vertikalrichtung ist wiederrum ähnlich wie bei der Kanalwand 42 auf eine Höhe begrenzt, die kleiner ist als die Höhe der Seitenwand 30, sodass sich im unteren Bereich ein offener Querschnitt ergibt, über den die Abluft, erneut umgelenkt, in Richtung zur Oberseite 14 des Gehäuses 12 in Richtung zu den Auslassöffnungen 32a, 32b strömen kann. Trotzdem erstreckt sich der Abluftkanal 50 über mehr als die Hälfte der Höhe des Gehäuses 12.

Durch die Umlenkung des Zuluft- und des Abluftstroms wie insbesondere aus der Figur 1B ersichtlich, wird bereits eine erhebliche Reduzierung der außen wahrnehmbaren Schallemission der Wärmetauscherkomponente 18 erzielt. Zusätzlich ist vorgesehen, dass die Kanalwand 42 auf der den Zuluftöffnungen 22a, 22b zugewandten Oberfläche mit einer Schalldämmschicht 43 ausgerüstet ist, was zu einer weiteren Reduzierung der außen wahrnehmbaren Schallemission des in dem Gehäuse 12 der Schalldämmanordnung 10 angeordneten Wärmetauscherkomponente 18 führt. Auch die der Zuluftkammer 46 zugewandte Oberfläche der Kanalwand 42 kann mit einer Schalldämmschicht ausgerüstet werden.

Entsprechend kann auf Seiten des Abluftkanals 50 zumindest die den Abluftöffnungen 32a, 32b zugewandte Oberfläche der Kanalwand 52 mit einer entsprechenden Schalldämmschicht 53 ausgerüstet sein, die erneut zu einer Reduzierung der außen wahrnehmbaren Schallemission der in Schalldämmanordnung 10 untergebrachten Wärmetauscherkomponente 18 führt. Darüber hinaus ist auch die der Trennwand 44 zugewandte Oberfläche der Kanalwand 52 vorzugsweise mit einer Schalldämmschicht ausgerüstet.

Bevorzugt wird sowohl auf Seiten des Zuluft- als auch auf Seiten des Abluftkanals die innenliegende Oberfläche der Oberseite 14 des Gehäuses 12 ebenfalls mit einer Schalldämmschicht 43a, beziehungsweise 53a ausgerüstet, sodass erneut eine Reduzierung der außen wahrnehmbaren Schallemission der Schalldämmanordnung mit der darin untergebrachten Wärmetauscherkomponente 18 resultiert.

In der Figur 1D ist schließlich noch ein Horizontalquerschnitt der Schalldämmanordnung 10 abgebildet, aus dem ersichtlich ist, dass die Zuluft, die durch die beiden Einlassöffnungen 22a, 22b in das Gehäuse 12 eintritt, in einem einzigen integralen Zuluftkanal 40 vertikal nach unten geführt wird. Der Innenraum 16 ist lediglich durch die Trennwand 44 in Richtung zur zweiten Seitenwand 30 des Gehäuses 12 begrenzt und nimmt die dort im Wesentlichen frei stehend und nur an die Trennwand 44 angrenzend angeordnete Wärmetauscherkomponente 18 auf. Die Zuluft wird von der Wärmetauscherkomponente 18 typischerweise auf der der Trennwand 44 abgewandten Seite aufgenommen, wobei, wie aus den Figuren 1B und 1D ersichtlich ist, selbstverständlich auch Zuluftöffnungen in der Wärmetauscherkomponente 18 möglich sind, die an der Oberseite der Wärmetauscherkomponente 18 angeordnet sind oder auch in Wänden, die senkrecht zu der Trennwand 44 verlaufen.

Auf der Abluftseite der Wärmetauscherkomponente 18 ist wiederum ein einziger integraler Abluftkanal 50 dargestellt, der zunächst den in der Abluftkammer 47 vertikal nach unten geführten Abluftstrom und nach Umlenkung um zweimal 90° zu den Auslassöffnungen 32a, 32b führt. Der Abluftkanal 50 erstreckt sich über eine Länge, die größer ist als die Hälfte der Höhe des Gehäuses 12.

Die Figuren 1A bis 1D zeigen deutlich, dass der Zuluftstrom als auch der Abluftstrom im Wesentlichen ungehindert und lediglich durch die Wände 42 und 52 begrenzt umgelenkt zum einen zu der Wärmetauscherkomponente 18 geführt werden, beziehungsweise von dieser in die Umgebung durch die Abluftöffnungen 32a, 32b abgeführt wird. Insbesondere sind keine den Zuluftstrom, beziehungsweise den Abluftstrom hindernden Einbauten vorgesehen, wie dies im Stand der Technik zur Schalldämmung notwendig erschien.

Damit kann die Schalldämmanordnung 10 mit relativ niedrigen Strömungsgeschwindigkeiten bei dem Zuluftstrom und dem Abluftstrom betrieben werden, obwohl hohe Volumina pro Zeiteinheit durchgeleitet werden können, was für die Schalldämmwirkung der Schalldämmanordnung 10 zusätzlich förderlich ist.

Figur 1E zeigt eine Variante der Ausführungsform der Schalldämmanordnung 10 der Figuren 1A bis 1D, bei der vorgesehen ist, dass die Wände 42, 44 und 52, die den Zuluftkanal 40 von dem Innenraum 16 bzw. den Innenraum 16 von der Abluftkammer 47 und die Abluftkammer 47 von dem Abluftkanal 50 trennen, mittels Streben 56, 57 und 58, 59 zu einer Baueinheit verbunden sind, die sich auf der Wärmetauscherkomponente 18 installieren lässt, beispielsweise durch einfaches Aufsetzen oder auch Fixieren dieser Baueinheit auf der Oberseite der Wärmetauscherkomponente 18.

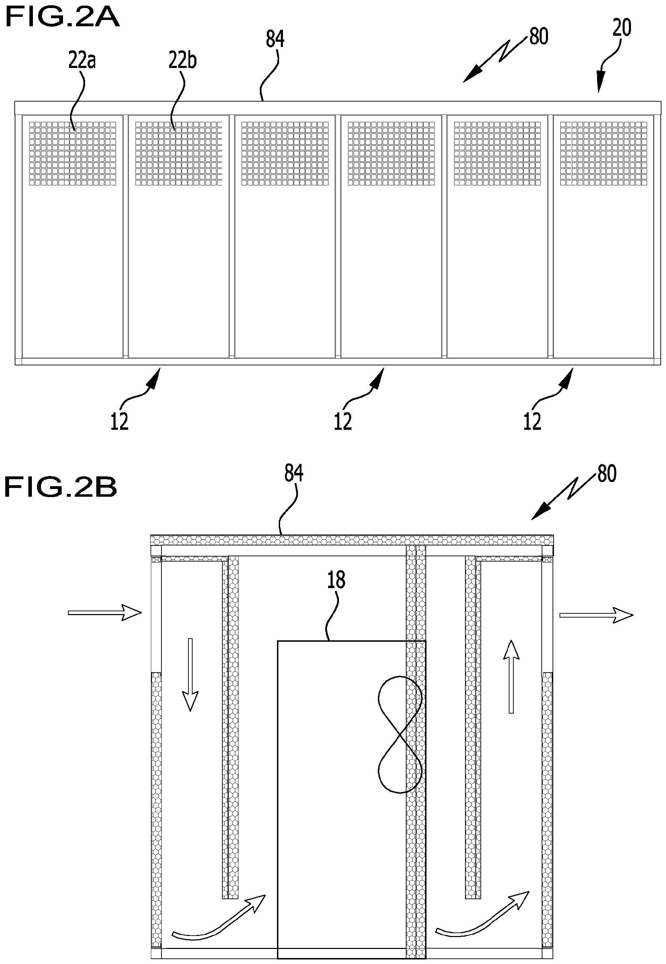

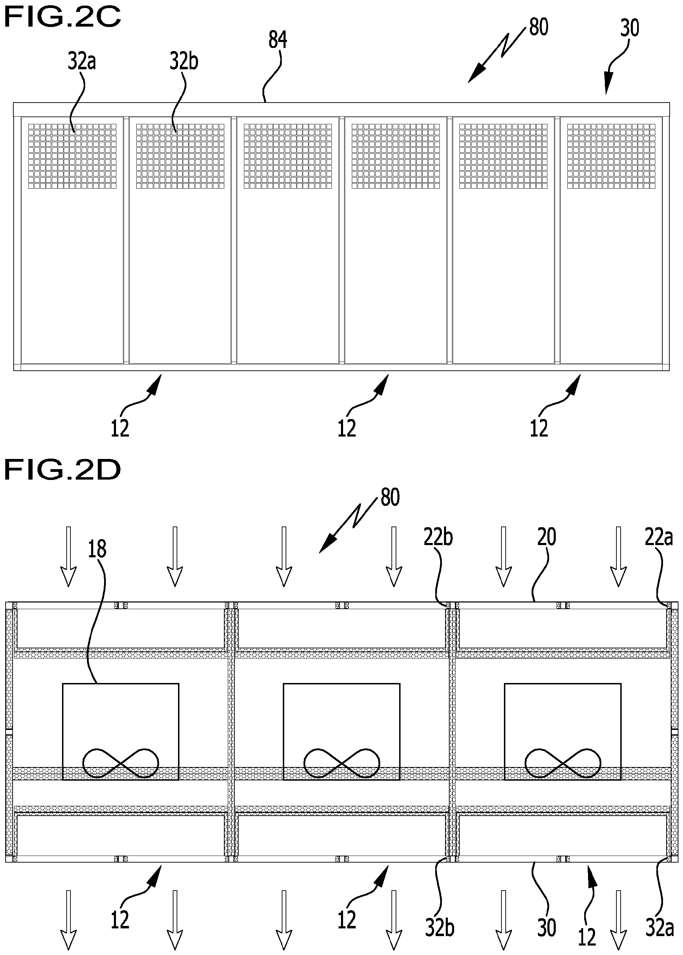

Figur 2 zeigt eine Variante einer Schalldämmanordnung 80, die sich konstruktiv aus drei Schalldämmeinheiten zusammensetzt, die jeweils vergleichbar sind mit der Schalldämmanordnung 10 der Figur 1. Die Schalldämmanordnung 80 ist an ihrer Oberseite 84 geschlossen ausgebildet.

Die Darstellungen in den Figuren 2A bis 2D entsprechen in ihrer Konzeption der Darstellung der Figur 1, d.h. in der Figur 2A sind die Seitenflächen 20 der nebeneinander angeordneten Gehäuse 12 zu sehen, während in der Figur 2C die Seitenflächen der Gehäuse 12 mit den Seitenflächen 30 zu sehen sind, die jeweils die entsprechenden Ein- und Auslässe 22a, 22b, beziehungsweise 32a, 32b beinhalten.

Der Durchsatz der Zuluft, beziehungsweise der Abluft, durch die Gehäuse 12 der einzelnen Schalldämmeinheiten ist in Figur 2B veranschaulicht und entspricht dem Strömungsprofil wie dies im Rahmen der Figur 1 im Einzelnen schon erläutert wurde.

Schließlich ist in der Figur 2D ein Horizontalquerschnitt abgebildet, bei dem noch einmal die Anordnung der einzelnen Schalldämmeinheiten nebeneinander ersichtlich ist.

Auch diese Ausführungsform zeigt nicht die erfindungsgemäßen Merkmale, dass der Auslass im Gehäuse oberhalb des Einlasses angeordnet ist, und dass die Abluftkammer im Innenraum des Gehäuses oberhalb der Zuluftkammer angeordnet ist.

Aufgrund der Ausbildung der Seitenwände 20, beziehungsweise 30, in Form von Türen sind die jeweils in den Gehäuse 12 untergebrachten Wärmetauscherkomponenten 18 einzeln zugänglich und leicht zu warten.

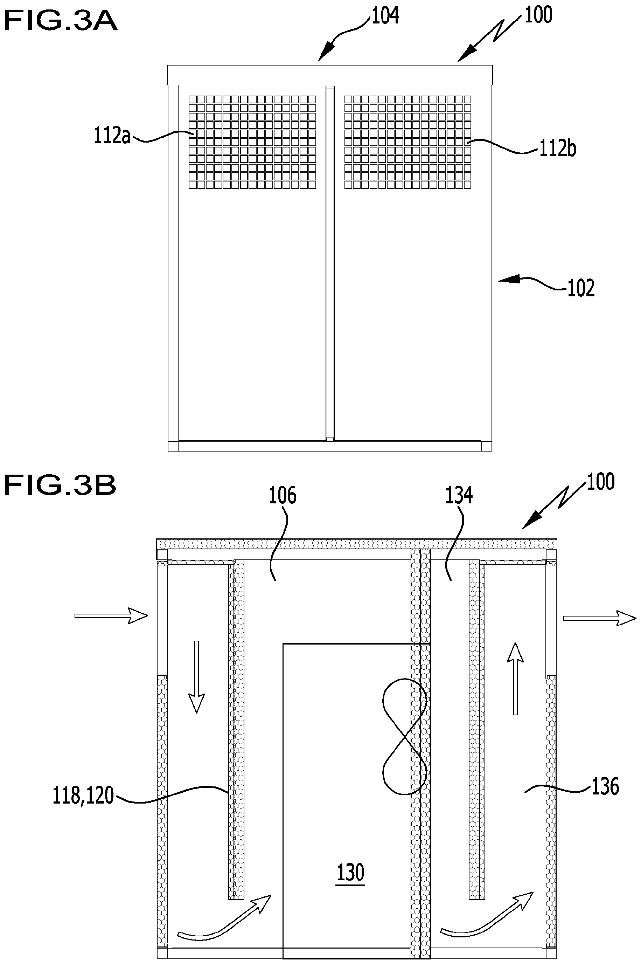

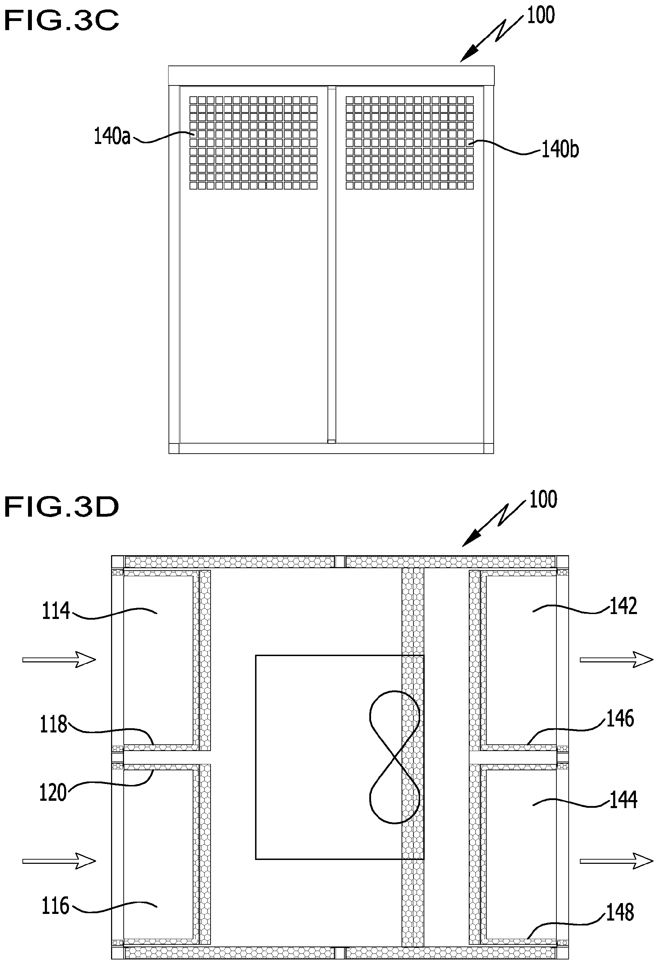

Figur 3 zeigt in den verschiedenen Ansichten der Figuren 3A bis 3D eine weitere Ausführungsform einer Schalldämmanordnung 100, die im Aufbau der Schalldämmanordnung 10 der Figur 1 in vielen Details entspricht, sodass im Wesentlichen auf die Beschreibung der Figur 1 verwiesen werden kann.

Auch diese Ausführungsform zeigt nicht die erfindungsgemäßen Merkmale, dass der Auslass im Gehäuse oberhalb des Einlasses angeordnet ist, und dass die Abluftkammer im Innenraum des Gehäuses oberhalb der Zuluftkammer angeordnet ist.

Die Besonderheit der Ausführungsform der Figur 3 besteht darin, dass die Schalldämmanordnung 100 in einem Gehäuse 102, das wiederum an seiner Oberseite 104 geschlossen ausgebildet ist, einen Innenraum 106 aufweist, zu dem von Einlassöffnungen 112a, 112b, die den Einlass des Gehäuses 102 bilden, zwei getrennte Zuluftkanäle 114, 116 vertikal vom oberen Drittel des Gehäusekörpers 102 in dem die Einlassöffnungen 112a, 112b ausgebildet sind, vertikal nach unten führen.

Die Auftrennung des Zuluftstroms in zwei Einzelströme durch die beiden parallelen Zuluftkanäle 114, 116 ermöglicht die Auskleidung eines größeren Oberflächenbereichs mit einer Schalldämmschicht 118, 120, die sich beispielsweise wie in der Figur 3D dargestellt über drei der vier den Strömungskanal 114, beziehungsweise 116 begrenzenden Seitenwänden erstrecken kann.

Im Innenraum 106 ist wiederum eine einheitliche Zuluftkammer ausgebildet, in der eine Wärmetauscherkomponente 130 angeordnet werden kann, vergleichbar mit der Anordnung wie sie im Rahmen der Figur 1 beschrieben wurde. Auch bei dieser Ausführungsform wird im Gehäuse 102 durch eine Trennwand 132 die die Zuluftkammer 106 von einer Abluftkammer 134 getrennt, von der aus ein Abluftkanal 136 die Abluft zu den Auslassöffnungen 140a, 140b leitet. Auch hier auf der Abluftseite kann vorgesehen sein, dass der Abluftstrom in zwei voneinander getrennten, parallel verlaufenden Kanälen 142, 144 zu den Auslassöffnungen 140a, 140b des Abluftauslasses geführt wird.

Auch hier kann vorgesehen sein, dass die Abluftkanäle 142, 144 auf drei Seitenflächen in der Figur 3 gezeigt mit einer Schalldämmschicht 146, 148 ausgerüstet werden.

Die Auftrennung der Zuluft- und Abluftkanäle 118, 120, beziehungsweise 142, 144 bietet die Möglichkeit die Schalldämmung noch weiter zu erhöhen.

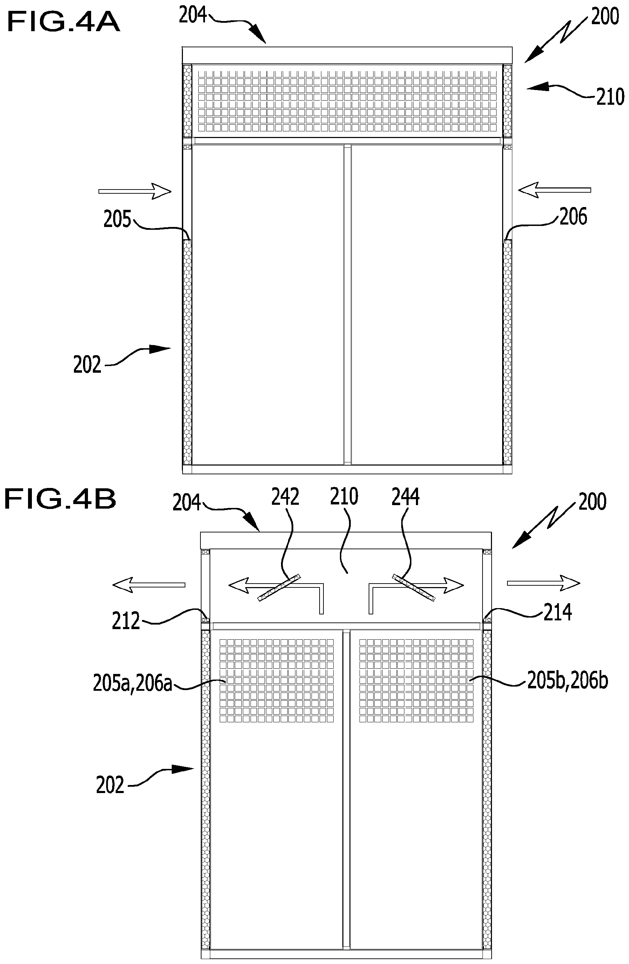

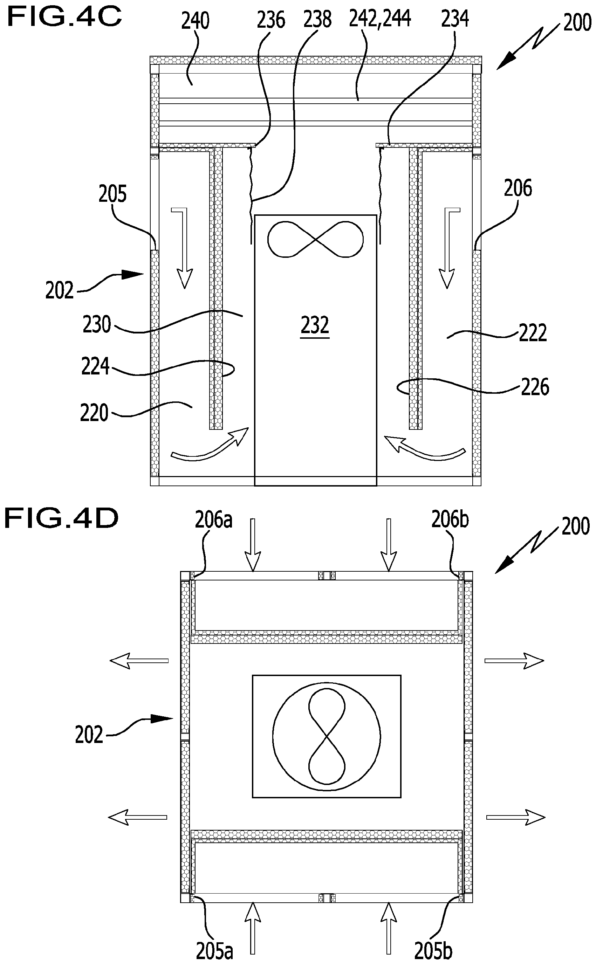

Figur 4 zeigt im Rahmen der Ansichten der Figuren 4A bis 4D eine Ausführungsform der vorliegenden Erfindung in Form einer Schallschutzanordnung 200 mit einem Gehäuse 202, welches wiederum an seiner Oberseite 204 geschlossen ausgebildet ist. Bei dem Gehäuse 202 sind zwei Einlässe für Zuluft auf gegenüberliegenden Seiten des quaderförmigen Gehäuses 202 vorgesehen, wie dies aus der vertikalen Querschnittansicht der Figur 4A ersichtlich ist.

Die Einlässe 205, 206 sind mit einem gewissen Abstand zur Oberseite 204 des Gehäuses 202 angeordnet, sodass im oberen Bereich des Gehäuses 202 eine Abluftkammer 210 ausgebildet werden kann (vgl. Figur 4B) aus der auf gegenüberliegenden Seitenwänden Abluft aus Abluftauslässen 212, 214 abgegeben werden kann.

Wie aus der Figur 4B ersichtlich ist auch hier vorgesehen, dass die einzelne Einlassöffnung 205, beziehungsweise 206 in zwei Einlassöffnungen 205a, 205b, beziehungsweise 206a, 206b ausgebildet ist.

Die Einlassöffnungen 205, beziehungsweise 206 sind wiederum durch Gitterstrukturen abgedeckt.

Das Gehäuse 202 beinhaltet in seinem Inneren ausgehend von den beiden Zulufteinlässen 205, 206 Zuluftkanäle 220, 222 die sich von dem in der oberen Hälfte in den Seitenwänden des Gehäuses 202 angeordneten Zulufteinlässen 205, 206 über mehr als die Hälfte der Höhe der Seitenwände, beziehungsweise des Gehäuses 202, vertikal nach unten erstrecken. Erfindungsgemäß sind die Einlässe und die Auslässe im oberen Drittel des Gehäuses angebracht.

Die Zuluftkanäle 220, 222 sind von dem von der Zuluftkammer über Kanalwände 224, 226 abgetrennt, die sich jeweils über die gesamte Breite und des Gehäuses 202 erstrecken. Die Trennwände 224, 226 enden deutlich oberhalb der Unterseite des Gehäuses 202, sodass die Zuluftströme in den Kanälen 220, 222 unter Umlenkung in eine zwischen ihnen gebildete Zuluftkammer 230 umgelenkt werden, in welcher eine Wärmetauscherkomponente 232 untergebracht ist. Oberhalb der Zulufteinlässe 205, 206 ist in dem Gehäuse 202 eine Trennwand 234 angeordnet, welche zentral eine Öffnung 236 aufweist, welche über ein Dichtungselement, beispielsweise ein sogenannter Segeltuchstutzen 238 mit dem oberen Ende der Wärmetauscherkomponente 232 im Wesentlichen strömungsdicht verbunden ist.

Bei dieser Ausführungsform weist die Wärmetauscherkomponente 232 einen Rotor zum Ausblasen der Abluft an dem an der Oberseite auf, die indirekt in der Verbindung mit dem Dichtelement/dem Segeltuchstutzen 238 steht.

Oberhalb der Trennwand 234 ist dann eine Abluftkammer 240 gebildet, die gleichzeitig einen Abluftkanal für das Gehäuse 202 darstellt.

Zur Umlenkung des Abluftstroms zu den Auslässen 212, 214 im Gehäuse 202 sind Leitbleche 242, 244 in der Abluftkammer 240 vorgesehen, welche den Abluftstrom der aus der Wärmetauscherkomponente 232 ausgeblasen wird in Richtung zu den Abluftauslässen 212, 214 umlenken. Optional kann auch vorgesehen sein, Abluftauslässe an allen vier Seitenwänden des Gehäuses 202 auszubilden (nicht dargestellt). Die Leitbleche 242, 244 werden dann dementsprechend angepasst, sodass eine im Wesentlichen gleichmäßige Verteilung des Abluftstroms in alle vier Richtungen erfolgt.

Die Leitbleche 242, 244 sind in der Ausführungsform der Figuren 4B und 4C in dem Gehäuse 202 oberhalb der Trennwand 234 angeordnet. Alternativ kann vorgesehen sein, Leitbleche auf der Oberseite der Wärmetauscherkomponente 232 anzuordnen (nicht gezeigt), mit denen ein vergleichbarer Verteilungseffekt erreichbar ist.

Bevorzugt werden die Leitbleche 242, 244 zumindest auf deren Anströmseite mit einer Schalldämmschicht ausgerüstet (nicht gezeigt).

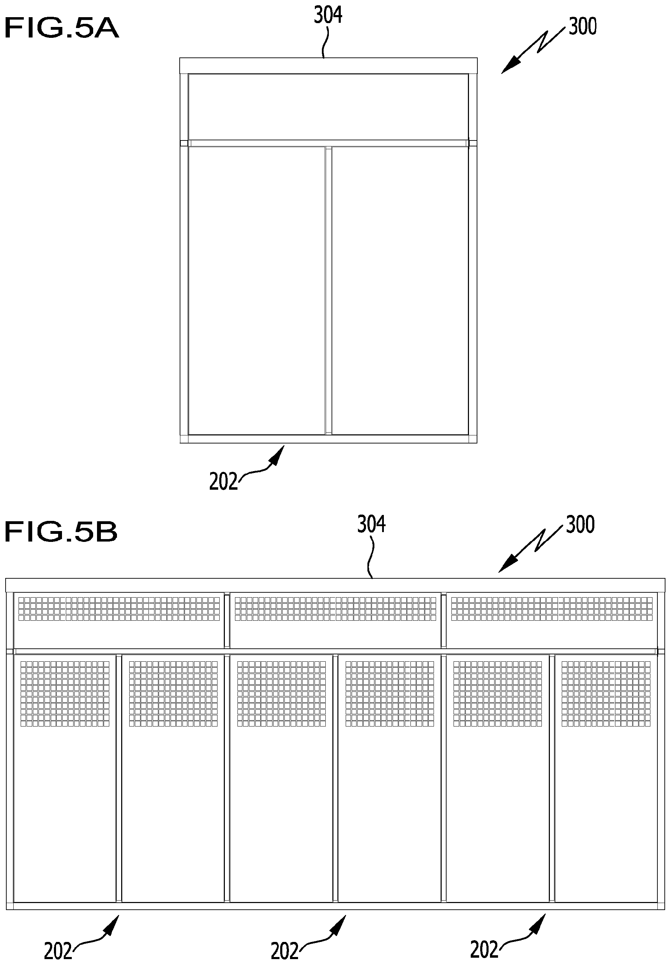

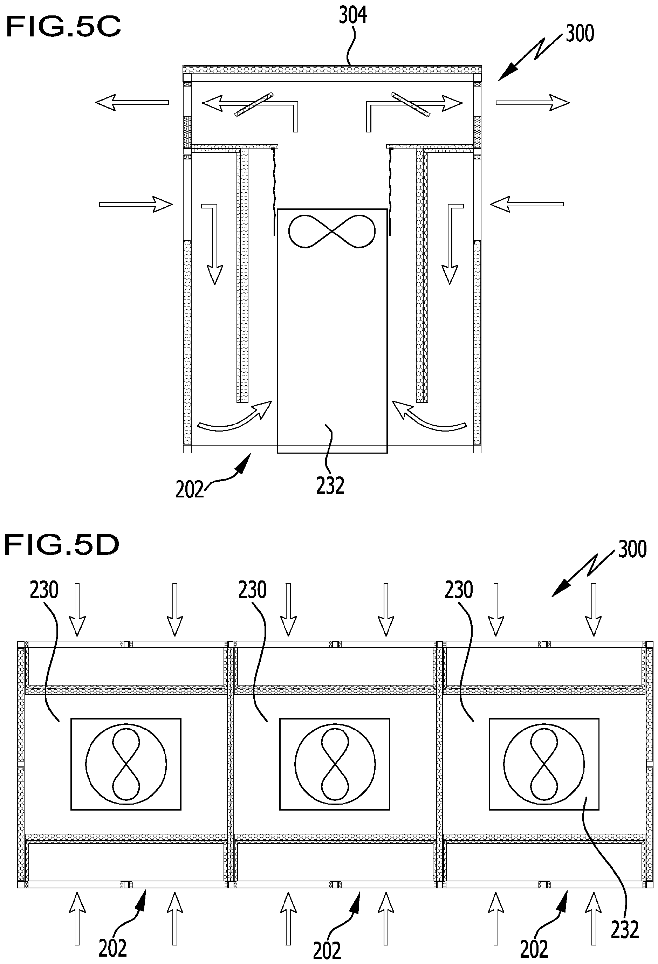

Figur 5 zeigt in den Ansichten der Figuren 5A bis 5D eine weitere Ausführungsform einer erfindungsgemäßen Schalldämmanordnung 300, bei der drei Gehäuseeinheiten 202, wie sie bereits im Rahmen der Figur 4 im Einzelnen beschrieben wurde, seitlich aneinander gereiht sind, sodass dann insgesamt drei Wärmetauscherkomponenten 232 in der Schalldämmanordnung 300 aufgenommen werden können.

Der grundsätzliche Aufbau der Gehäuseeinheit 202 der erfindungsgemäßen Schalldämmanordnung 300 unterscheidet sich nicht von dem Aufbau der im Rahmen der Figur 4 beschrieben wurde, sodass hier dieselben Bezugszeichen verwendet werden.

Die Gehäuseeinheiten 202 sind direkt aneinander gereiht, wobei gegebenenfalls die Gehäuseeinheiten aneinander mit lediglich einer Wand angrenzen, sodass die Innenräume 230 der jeweiligen Gehäuseeinheiten 202 voneinander strömungstechnisch getrennt sind. Die Gehäuseeinheiten 202 werden von einer gemeinsamen Oberseite 304 der Schalldämmanordnung 300 abgedeckt.

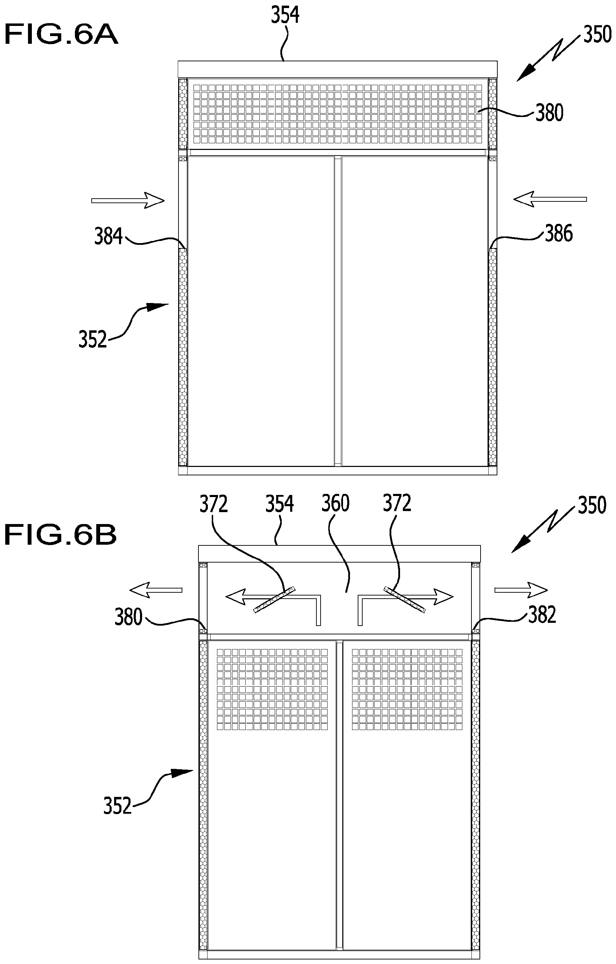

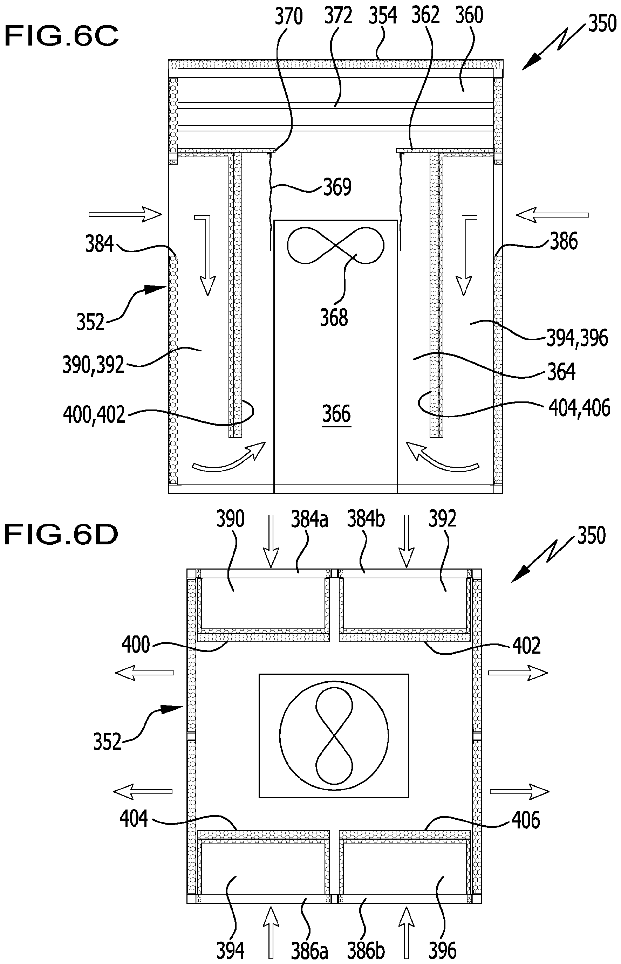

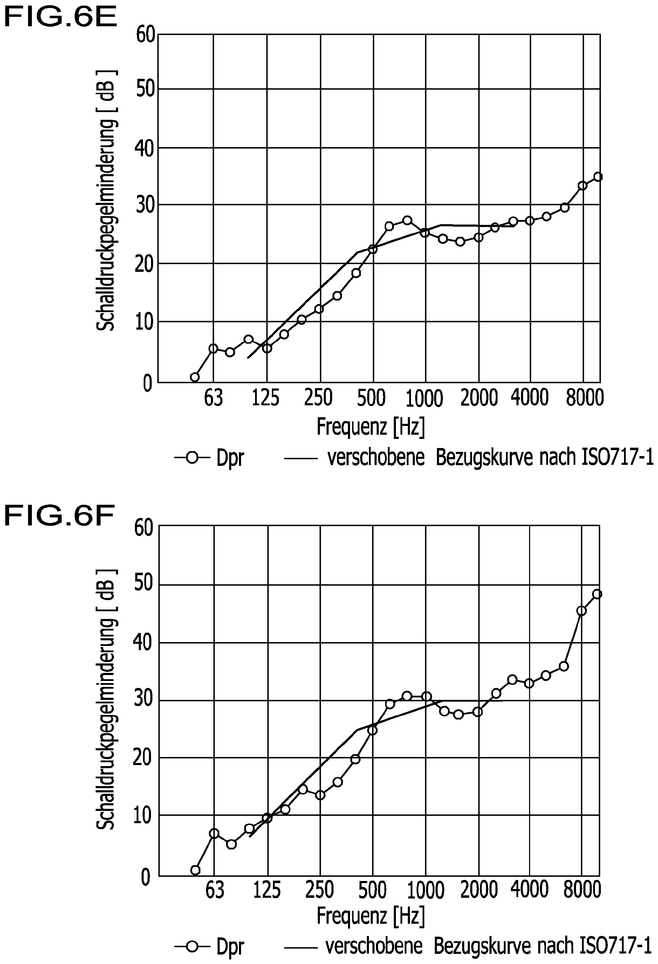

Figur 6 zeigt in den Abbildungen der Figuren 6A bis 6D eine weitere Variante der Schalldämmanordnung 200 in Form einer Schalldämmanordnung 350 mit einem Gehäuse 352, welches auf seiner Oberseite 354 geschlossen ausgebildet ist. Das Gehäuse 352 weist direkt benachbart zur geschlossenen Oberseite 354 eine Abluftkammer 360 auf, welche sich im Wesentlichen über den gesamten Horizontalquerschnitt des Gehäuses 352 erstreckt. Der darunterliegende Bereich des Gehäuses 352 ist über eine Trennwand 362 von einem Innenraum 364 getrennt, in welchem frei stehend eine Wärmetauscherkomponente 366 angeordnet ist.

Die Wärmetauscherkomponente 366 bläst die Abluft mittels eines Rotors 368 senkrecht nach oben ab und durch eine Öffnung 370 der Trennwand 362 in die Abluftkammer 360 hinein. Dort wird die Abluft gegebenenfalls über Leitbleche 372 in eine Horizontalrichtung umgelenkt, sodass die Abluft dann durch die Auslässe 380, 382, die in den gegenüberliegenden Seitenwänden des Gehäuses 352 vorgesehen sind, austreten kann.

Die Oberseite der Wärmetauscherkomponente 366 ist über einen sogenannten Segeltuchstutzen 369 strömungsdicht mit der Öffnung 370 der Trennwand 362 verbunden, sodass die Zuluftkammer 364 und die Abluftkammer 360 strömungstechnisch getrennt sind.

Die Zuluft wird über Einlässe 384, 386 ins Innere des Gehäuses 352 entlang von jeweils zwei parallelen Zuluftkanälen 390, 392, beziehungsweise 394, 396, in den Innenraum 364 geleitet. Die Einlässe 384, 386 werden durch jeweils zwei Einlassöffnungen 384a, 384b, beziehungsweise 386a, 386b gebildet, die Zugang von der Umgebung zu den im Inneren ausgebildeten, parallel angeordneten Zuluftkanälen 390, 392, beziehungsweise 394, 396 schaffen.

Die Zuluft wird nach Eintritt durch die Einlässe 384, 386 in den parallelen Zuluftkanälen 390, 392, beziehungsweise 394, 396 vertikal nach unten durch im Gehäuse angeordnete Kanalwände 400, 402, beziehungsweise 404, 406, umgelenkt, welche mit einem Abstand zur Unterseite des Gehäuses 352 enden, sodass die Zuluftströme erneut umgelenkt in den Innenraum 364 eintreten können.

Erfindungsgemäß sind die Einlässe 384, 386 und die Auslässe 380, 382 im oberen Drittel des Gehäuses 352 angeordnet.

Die Schalldämmanordnung 350 wurde einem Schalldämmtest unterzogen. Die Abmessungen waren wie folgt:
Die Grundfläche war quadratisch ausgebildet mit einer Seitenlänge von 165 cm.

Die Höhe der Schalldämmanordnung 350 betrug 240 cm.

Der Abstand der Kanalwände 400, 402 beziehungsweise 404, 406 von der jeweiligen Gehäusewand betrug ca. 18 cm, das untere Ende der Kanalwände 400, 402 beziehungsweise 404, 406 war von der Bodenfläche ca. 40 cm beabstandet.

Die Höhe der Einlassöffnungen 384a, 384b beziehungsweise 386a, 386b betrug ca. 25 cm, deren Breite betrug jeweils ca. 80 cm. Die Höhe der Auslassöffnungen betrug ebenfalls ca. 25 cm, die Breite ca. 160 cm.

Die für die Herstellung der Schalldämmanordnung verwendeten Materialien waren wie folgt:
Die Gehäuseteile einschließlich der Kanalwände 400, 402, 404, 406 waren aus 1,5 mm dickem eloxiertem Aluminiumblech gefertigt. Dasselbe Material kam auch zum Einsatz für die Oberseite 354.

Zur Verbesserung der Schalldämmwerte waren die Zuluftkanäle mit einem zweilagigen Material beschichtet, bestehend aus einer 3 mm dicken Schwerfolie vom Typ EVA-06 sowie einem 30 mm dicken PUR-Schaum vom Typ R615VL. Die Wände des Gehäuses - auch soweit sie Teil der Zuluftkanäle bilden - sowie die Oberseite 354 waren mit einem Mehrschichtmaterial aus der Schwerfolie EVA-06 (3 mm dick) sowie einem Polyethylen-Schaum mit 50 mm Dicke vom Typ D 2600 ausgerüstet.

Die zum Innenraum 364 weisenden Oberflächen der Kanalwände 400, 402 waren ebenfalls mit einer 50 mm dicken PE-Schaumschicht vom Typ D 2600 bestückt.

Die Trennwand 362 war auf der Oberseite mit einer PUR-Schaumschicht mit 30 mm Dicke vom Typ R 615VL beschichtet auf der Unterseite mit der Schwerfolie EVA-06. Die Leitbleche waren aus einem PE-Schaum mit 50 mm Dicke der in einem Rahmen gehalten wurde gebildet (PE-Schaum D 2600).

Sämtliche vorgenannten Materialien nämlich PE-Schaum 50 mm dick, PUR-Schaum 30 mm dick sowie die 3 mm dicke Schwerfolie sind unter den genannten Typenbezeichnungen von der Firma CELLOFOAM GmbH & Co. KG erhältlich.

Ein Schalldämmtest mit dieser Ausführungsform der erfindungsgemäßen Schalldämmanordung 350 nach dem Reziprioritätsverfahren (angelehnt an DIN EN ISO 1154-1:2010) in einem Hallraum (nach ISO 3741) hat eine Schalldruckpegelminderung von 23 dB ergeben (berechnet nach ISO 717-1:2013), wobei im Innenraum 364 keine Wärmetauscherkomponente 366 installiert war. Die Schalldruckpegelminderung im Frequenzbereich von 50 Hz bis 10 kHz ist in Figur 6E dargestellt.

Nachdem an der Öffnung 370 der Trennwand 362 der Segeltuchstutzen 369 installiert war, wurde der Test wiederholt und ergab eine Schalldruckpegelminderung von 26 dB. Die Schalldruckpegelminderung über den Frequenzbereich von 50 Hz bis 10 kHz ist in Figur 6F dargestellt.

Die Messbedingungen waren wie folgt: Hallraum V = 392 m³, Temperatur 21°C, Luftdruck 961 hPa, relative Luftfeuchte 40%.

Im Hallraum waren 6 Messpunkte installiert sowie 1 rotierendes Mikrofon mittig im Innenraum 364 der Schalldämmanordnung 350 ca. 80 cm oberhalb der Bodenfläche. Als Schallsignal wurde ein sogenanntes weißes Rauschen über drei Lautsprecherpositionen im Hallraum verwendet.

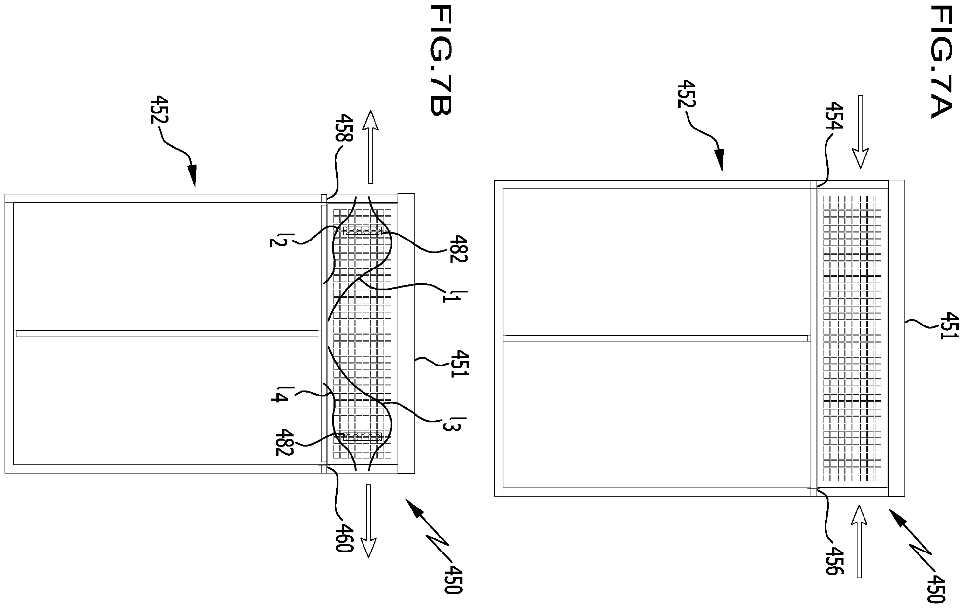

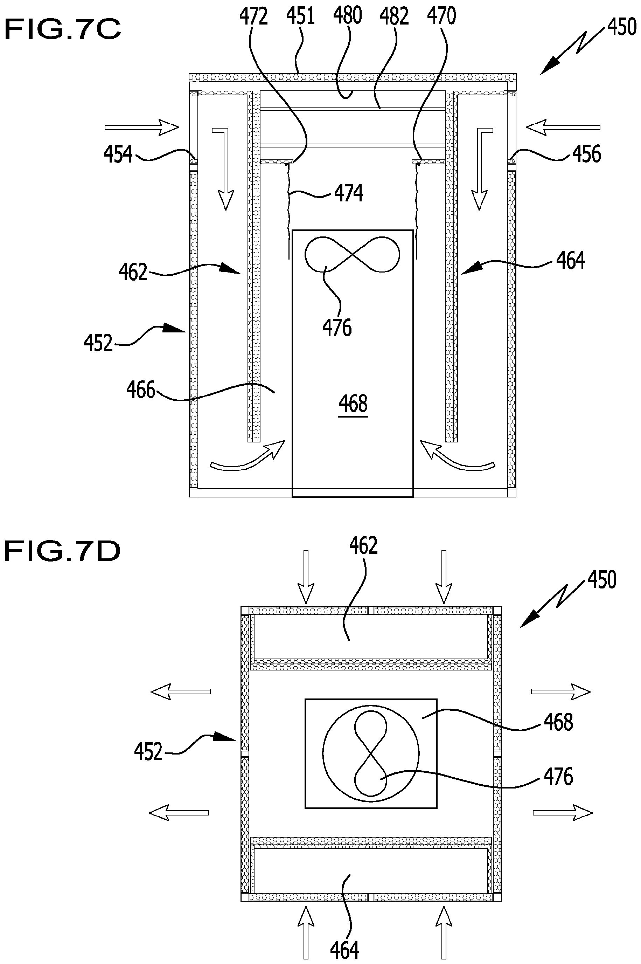

Eine weitere Ausführungsform einer Schalldämmanordnung 450 ist in Figur 7 bzw. den Figuren 7A bis 7D gezeigt.

Die Schalldämmanordnung 450 weist ein Gehäuse 452 auf, bei welchem wie in den Teilfiguren 7A und 7B gezeigt, Zuluft- und Abluftöffnungen 454, 456, beziehungsweise 458, 460 im oberen Drittel des Gehäuses 452 angeordnet sind. Jedoch zeigt diese Ausführungsform nicht die erfindungsgemäßen Merkmale, dass der Auslass im Gehäuse oberhalb des Einlasses angeordnet ist, und dass die Abluftkammer im Innenraum des Gehäuses oberhalb der Zuluftkammer angeordnet ist.

Im Inneren des Gehäuses 452 sorgen Zuluftkanalwände 462, 464 dafür, dass die Zuluft nach Eintritt in die Zulufteinlässe 454, 456 vertikal nach unten umgelenkt werden und entlang dem zwischen einer Seitenwand des Gehäuses und den Kanalwänden 462, 464 ausgebildeten Zuluftkanal bis zur Unterseite des Gehäuses 452 geleitet werden.

Zwischen den Zuluftkanalwänden 462, 464 verbleibt im Inneren des Gehäuses 452 ein Innenraum 466, der eine Wärmetauscherkomponente 468 im Wesentlichen frei stehend aufnehmen kann. Dieser Innenraum 466 ist nach oben durch eine Trennwand 470 begrenzt, welche eine Öffnung 472 aufweist, welche über einen sogenannten Segeltuchstutzen 474 strömungsdicht mit der Oberseite der Wärmetauscherkomponente 468 verbunden ist, sodass deren Rotor 476 Abluft direkt und getrennt von dem Zuluftbereich des Innenraums 466 in die Abluftkammer 480 ausblasen kann.

In der Abluftkammer 480 sind Leitbleche 482 angeordnet, welche den vom Rotor 476 kommenden Abluftstrom in die Horizontale umleiten und zu den Abluftauslässen 458, 460 ausblasen. Der Verlauf der Luftströmung der Abluft ist in Figur 7B anhand der Linien l₁, l₂, l₃ und l₄ schematisch gezeigt.

Wie bei den zuvor besprochenen Ausführungsformen sind wiederum vorzugsweise die Oberflächen der Zustrom- und Abstromkammer, beziehungsweise -kanäle, mit einer Schalldämmschicht beschichtet.

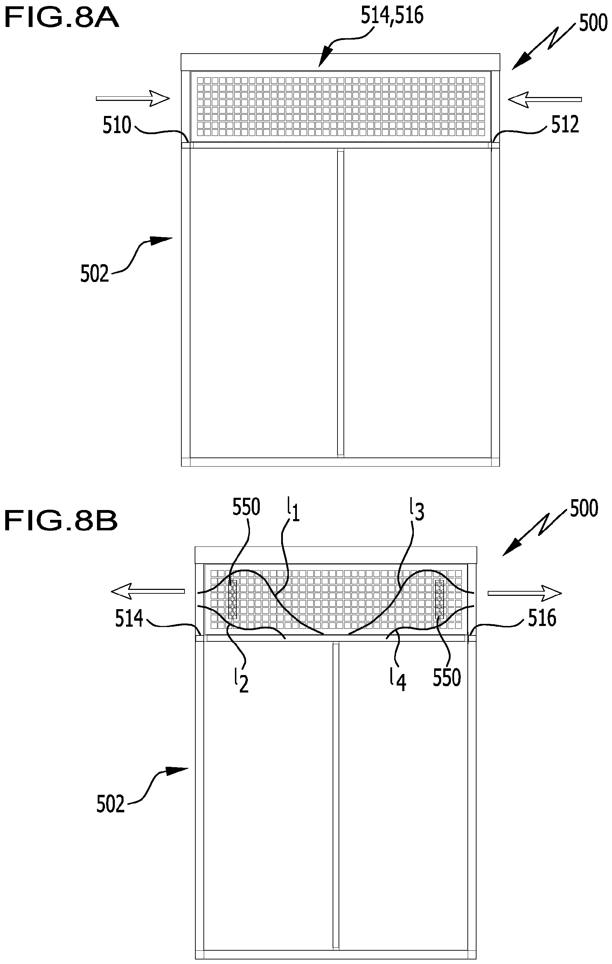

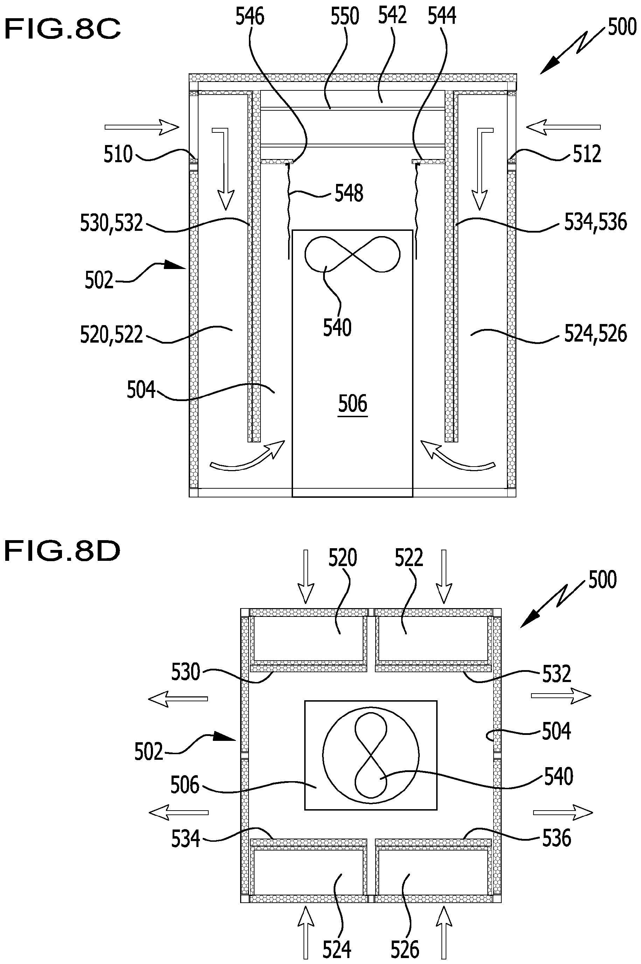

Eine Variante der Schalldämmanordnung 450 der Figur 7 ist in der Figur 8 gezeigt, bei der die Schalldämmanordnung 500 mit einem Gehäuse 502 einen Innenraum 504 bereitstellt, in dem eine Wärmetauscherkomponente 506 frei stehend untergebracht werden kann.

Das Gehäuse 502 weist im oberen Drittel Zulufteinlässe 510, 512 sowie Abluftauslässe 514, 516 auf, jeweils an einander gegenüberliegenden Seitenwänden des Gehäuses 502 (vgl. Figuren 8A und 8B).

Die Zuluft wird im Inneren des Gehäuses 502 in jeweils zwei parallelen Zuluftkanälen 520, 522, 524, 526 vertikal durch Kanalwände 530, 532, 534, 536 nach unten geführt, bis zur Unterseite des Gehäuses 502, wo die Zuluftströme umgelenkt werden um dann in den Innenraum 504 einzutreten.

Die Abluft wird durch den Rotor 540 der Wärmetauscherkomponente 506 vertikal nach oben geblasen und tritt in eine Abluftkammer 542 ein, welche von dem Innenraum 504 über eine Trennwand 544 abgetrennt ist. Die Trennwand 544 weist zentral eine Öffnung 546 auf, die über einen sogenannten Segeltuchstutzen 548 strömungsdicht mit der Oberseite der Wärmetauscherkomponente 506 verbunden wird.

In der Abluftkammer 542 ist ein Luftleitblech 550 angeordnet, mit welchem der Abluftstrom in zwei Teile geteilt und jeweils zu den Abluftauslässen 514, 516 horizontal umgelenkt wird. Der Verlauf der Luftströmung der Abluft ist in Figur 7B anhand der Linien l₁, l₂, l₃ und l₄ schematisch gezeigt. Die Kanalwände 530, 532, beziehungsweise 534, 536 für die Zuluft sind bevorzugt wiederum mit einer Schalldämmschicht bestückt, wie dies im Zusammenhang mit den vorstehend beschriebenen Ausführungsformen bereits diskutiert wurde.

Auch im Bereich der Abluftkammer 542 können Schalldämmschichten auf Oberflächen, beispielsweise auf den Leitblechen 550 angebracht werden, um so die Schalldämmwirkung der Schalldämmanordnung weiter zu verbessern.

Auch diese Ausführungsform zeigt nicht die erfindungsgemäßen Merkmale, dass der Auslass im Gehäuse oberhalb des Einlasses angeordnet ist, und dass die Abluftkammer im Innenraum des Gehäuses oberhalb der Zuluftkammer angeordnet ist.

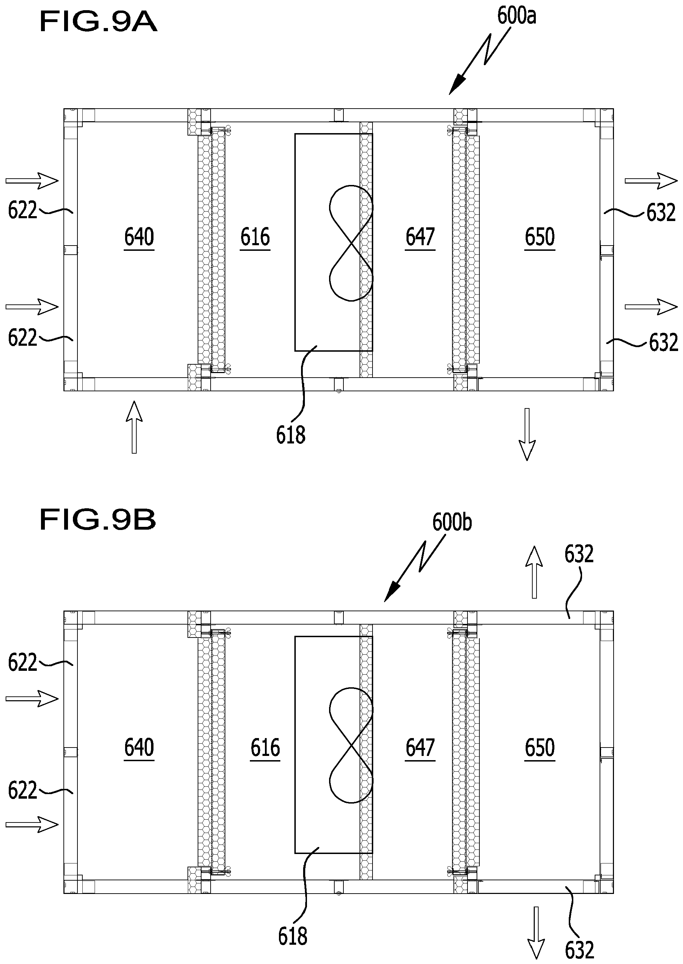

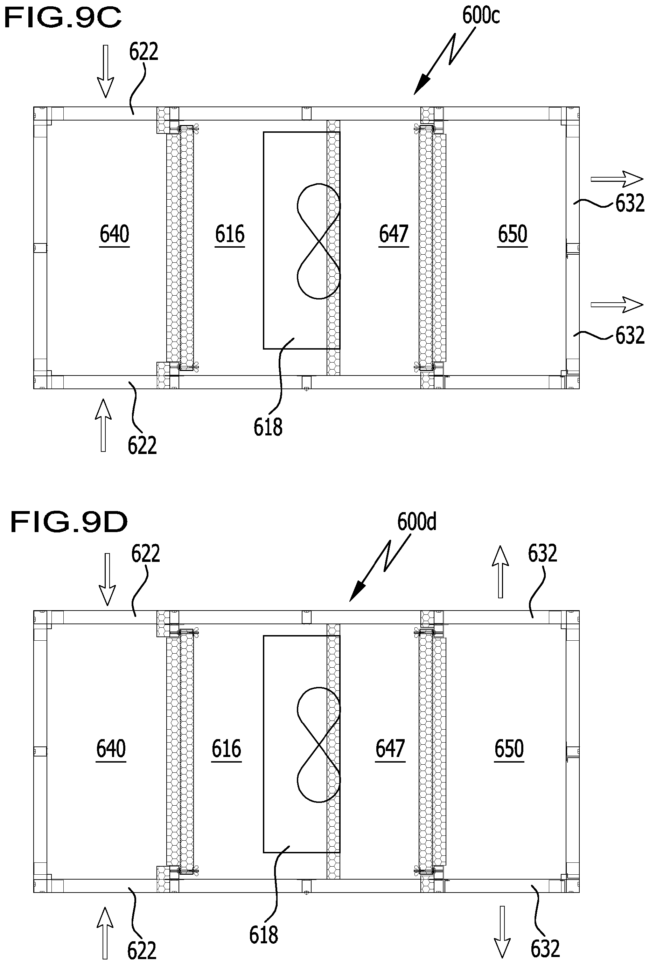

Die Figuren 9A bis 9D zeigen weitere Varianten a, b, c und d einer Schalldämmanordnung 600, die in ihrem Konzept an die im Rahmen der Beschreibung der Figur 1 erläuterte Schalldämmanordnung 10 angelehnt ist. Anhand dieser Varianten der Schalldämmanordnungen 600a, 600b, 600c, 600d sollen weitere Vorteile eines modularen Konzepts im Zusammenhang mit der vorliegenden Erfindung erläutert werden.

Der Aufbau im Inneren der Schalldämmanordnungen 600a, 600b, 600c, 600d ist gegenüber dem der Figur 1 gezeigten Aufbau analog. Die Zuluft- und Abluftführung in den Zuluft- und Abluftkanälen 640, 650 bleibt im Prinzip bei allen Varianten unverändert. Die Anordnung der Einlässe 622 und Auslässe 632 in Stirn- oder Seitenwänden können, wie aus den Figuren 9A bis 9D ersichtlich, beliebig variiert werden um die Schalldämmanordnung 600 an die baulichen Gegebenheiten des Umfelds, in dem die Installation der Wärmetauscherkomponente 618 gefordert ist, anzupassen. Die Funktionalität der Schalldämmanordnungen 600 in Bezug auf die Luftzufuhr und Ableitung als auch bezüglich der Schalldämmung bleibt dabei jeweils vollständig erhalten.

## Patentansprüche

1. Schalldämmanordnung (200, 300, 350) zur im Wesentlichen vollständigen Aufnahme einer oder mehrerer Wärmetauscherkomponenten aus den Bereichen der Kälte- und Klimatechnik,
wobei die Schalldämmanordnung ein an seiner Oberseite (204) geschlossenes Gehäuse (202) mit einem Innenraum für die Aufnahme der Wärmetauscherkomponente(n) (18, 232, 366) umfasst,
wobei das Gehäuse einen Einlass (205) für Zuluft und einen Auslass (212) für Abluft umfasst,
wobei der Einlass für Zuluft im oberen Drittel des Gehäuses angeordnet ist und ein Zuluftkanal (220) einen vertikal nach unten verlaufenden Abschnitt umfasst,
wobei der Auslass für Abluft im oberen Drittel des Gehäuses angeordnet ist und ein Abluftkanal (210, 240) einen vertikal nach oben verlaufenden Abschnitt umfasst,
wobei der Auslass im Gehäuse oberhalb des Einlasses angeordnet ist, wobei in dem Gehäuse der Zuluftkanal ausgebildet ist, der einen Zuluftstrom vom Einlass zu einer Zuluftkammer (230) des Innenraums des Gehäuses unter mindestens zweimaliger Umlenkung führt,
wobei in dem Gehäuse ein Abluftkanal ausgebildet ist, der einen Abluftstrom von einer Abluftkammer (210, 240, 360) im Innenraum des Gehäuses zum Auslass unter mindestens einmaliger Umlenkung führt, und wobei die Zuluftkammer und die Abluftkammer im Innenraum räumlich voneinander getrennt ausgebildet sind, wobei die Abluftkammer im Innenraum des Gehäuses oberhalb der Zuluftkammer angeordnet ist.

2. Schalldämmanordnung nach Anspruch 1, wobei der Zuluftkanal (220) und/oder die Zuluftkammer (230) einen oder mehrere Oberflächenbereiche aufweist/aufweisen, welche mit einer Schalldämmschicht ausgerüstet sind.

3. Schalldämmanordnung nach Anspruch 1 oder 2, wobei eine Umlenkung des Zuluft- bzw. des Abluftstroms eine Änderung der Strömungsrichtung des jeweiligen Stroms um ca. 90° oder mehr beinhaltet.

4. Schalldämmanordnung nach einem der Ansprüche 1 bis 3, wobei das Gehäuse einen im Wesentlichen quaderförmig ausgebildeten Grundkörper umfasst.

5. Schalldämmanordnung nach einem der Ansprüche 1 bis 4, wobei das Gehäuse einen Einlass mit zwei oder mehr getrennten, bevorzugt nebeneinander angeordneten Einlassöffnungen (205a, 205b, 206a, 206b) für die Zuluft und/oder einen Auslass mit zwei oder mehr getrennten, bevorzugt nebeneinander angeordneten Auslassöffnungen (212, 214) für die Abluft umfasst,
wobei optional von jeder Einlassöffnung des Gehäuses ein gesonderter Zuluftkanal zur Zuluftkammer des Innenraums führt, und/oder wobei von der Abluftkammer (210, 240) des Innenraums zu jeder Auslassöffnung des Gehäuses ein gesonderter Abluftkanal führt, und/oder wobei die Einlässe ineinander gegenüberliegenden Seitenwänden des im Wesentlichen quaderförmig ausgebildeten Gehäusegrundkörpers angeordnet sind.

6. Schalldämmanordnung nach Anspruch 5, wobei die Auslässe ineinander gegenüberliegenden Seitenwänden des im Wesentlichen quaderförmig ausgebildeten Gehäusegrundkörpers angeordnet sind.

7. Schalldämmanordnung nach einem der Ansprüche 4 bis 6, wobei der Einlass und der Auslass bzw. die Einlässe und die Auslässe jeweils in verschiedenen Seitenwänden des im Wesentlichen quaderförmig ausgebildeten Gehäusegrundkörpers angeordnet sind, oder
wobei der Einlass in einer ersten Seitenwand des Gehäusegrundkörpers ausgebildet ist und wobei der Auslass in einer zweiten Seitenwand des Gehäusegrundkörpers ausgebildet ist, wobei die zweite Seitenwand der ersten Seitenwand gegenüberliegend angeordnet ist.

8. Schalldämmanordnung nach einem der Ansprüche 1 bis 7, wobei die Schalldämmanordnung einen Sockel zur Platzierung der einen oder der mehreren Wärmetauscherkomponente(n) umfasst .

9. Schalldämmanordnung nach einem der Ansprüche 1 bis 8, wobei die Zuluftkammer und die Abluftkammer im Wesentlichen strömungsdicht mit einem in der oder den Wärmetauscherkomponente(n) ausgebildeten Strömungsweg verbindbar sind, und/oder
wobei der Strömungsquerschnitt des Abluftkanals oder der Abluftkanäle gleichgroß oder größer als der Strömungsquerschnitt des Zuluftkanals oder der Zuluftkanäle ausgebildet ist, und/oder
wobei der Zuluftkanal oder die Zuluftkanäle gleich lang oder länger ausgebildet ist/sind als der Abluftkanal oder die Abluftkanäle.

10. Schalldämmanordnung nach einem der Ansprüche 1 bis 9, wobei die Querschnittsfläche am Übergang des Zuluftkanals in die Zuluftkammer des Innenraums ca. 50 % bis ca. 250 %, insbesondere 80 % bis ca. 150 %, am meisten bevorzugt ca. 90 % bis ca. 120 % der Querschnittsfläche des Zuluftkanals an dessen engster Stelle beträgt.

11. Schalldämmanordnung nach einem der Ansprüche 1 bis 10, wobei der Querschnitt des Zuluftkanals so bemessen ist, dass die Strömungsgeschwindigkeit der Zuluft am engsten Querschnitt des Strömungswegs des Zuluftstroms vom Einlass bis zur Zuluftkammer gemessen ca. 3 bis ca. 15 m/s beträgt und/oder der Druckabfall entlang des Strömungswegs der Zuluft vom Einlass bis zur Zuluftkammer auf ca. 25 Pa oder weniger begrenzt ist.

12. Schalldämmanordnung nach einem der Ansprüche 1 bis 11, wobei der Querschnitt des Abluftkanals so bemessen ist, dass die Strömungsgeschwindigkeit der Abluft am engsten Querschnitt des Strömungswegs des Abluftstroms von der Abluftkammer bis zum Auslass, am engsten Querschnitts des Strömungswegs gemessen, ca. 3 m/s bis ca. 20 m/s beträgt.

13. Schalldämmanordnung nach einem der Ansprüche 1 bis 12, wobei das Gehäuse eine oder mehrere Türen (36a, 36b) und/oder Wandsegmente umfasst, wobei optional einer oder mehrere der Einlässe und/oder einer oder mehrere der Auslässe in der einen oder mehreren der Türen und/oder den Wandsegmenten ausgebildet sind,
wobei insbesondere die Türen und/oder Wandsegmente im Wesentlichen dieselben Abmessungen in Höhe und Breite aufweisen.

## Claims

1. Sound insulation arrangement (200, 300, 350) for substantially completely accommodating one or more heat exchanger components from the fields of refrigeration and air conditioning technology,
wherein the sound insulation arrangement comprises a housing (202) that is closed on its top side (204) and that has an inner space for the accommodation of the heat exchanger component(s) (18, 232, 366), wherein the housing comprises an inlet (205) for supply air and an outlet (212) for exhaust air,
wherein the inlet for supply air is arranged in the upper third of the housing and a supply air channel (220) comprises a portion extending vertically downwards,
wherein the outlet for exhaust air is arranged in the upper third of the housing and an exhaust air channel (210, 240) comprises a portion extending vertically upwards,
wherein the outlet is arranged in the housing above the inlet,
wherein the supply air channel is formed in the housing, which supply air channel guides a supply air stream from the inlet to a supply air chamber (230) of the inner space of the housing while redirecting said supply air stream at least twice,
wherein an exhaust air channel is formed in the housing, which exhaust air channel guides an exhaust air stream from an exhaust air chamber (210, 240, 360) in the inner space of the housing to the outlet while redirecting said exhaust air stream at least once,
and wherein the supply air chamber and the exhaust air chamber are formed spatially separated from one another in the inner space, wherein the exhaust air chamber is arranged in the inner space of the housing above the supply air chamber.

2. Sound insulation arrangement in accordance with Claim 1, wherein the supply air channel (220) and/or the supply air chamber (230) has/have one or more surface regions, which is/are equipped with a sound insulation layer.

3. Sound insulation arrangement in accordance with Claim 1 or 2, wherein a redirection of the supply air or the exhaust air stream involves a change in the flow direction of the respective stream by about 90° or more.

4. Sound insulation arrangement in accordance with any one of Claims 1 to 3, wherein the housing comprises a base body of substantially cuboidal configuration.

5. Sound insulation arrangement in accordance with any one of Claims 1 to 4, wherein the housing comprises an inlet with two or more separate inlet openings (205a, 205b, 206a, 206b) for the supply air, which are preferably arranged next to one another, and/or an outlet with two or more separate outlet openings (212, 214) for the exhaust air, which are preferably arranged next to one another,
wherein optionally a separate supply air channel leads from each inlet opening of the housing to the supply air chamber of the inner space, and/or
wherein a separate exhaust air channel leads from the exhaust air chamber (210, 240) of the inner space to each outlet opening of the housing, and/or
wherein the inlets are arranged in opposing side walls of the housing base body of substantially cuboidal configuration.

6. Sound insulation arrangement in accordance with Claim 5, wherein the outlets are arranged in opposing side walls of the housing base body of substantially cuboidal configuration.

7. Sound insulation arrangement in accordance with any one of Claims 4 to 6, wherein the inlet(s) and the outlet(s) are each arranged in different side walls of the housing base body of substantially cuboidal configuration, or wherein the inlet is formed in a first side wall of the housing base body and wherein the outlet is formed in a second side wall of the housing base body, wherein the second side wall is arranged opposite to the first side wall.

8. Sound insulation arrangement in accordance with any one of Claims 1 to 7, wherein the sound insulation arrangement comprises a base for placing the one or more heat exchanger component(s).

9. Sound insulation arrangement in accordance with any one of Claims 1 to 8, wherein the supply air chamber and the exhaust air chamber are connectable in a substantially flow-tight manner to a flow path formed in the heat exchanger component(s), and/or
wherein the flow cross section of the exhaust air channel(s) is configured to be of equal size or greater than the flow cross section of the supply air channel(s), and/or
wherein the supply air channel(s) is/are configured to be of equal length or longer than the exhaust air channel(s).

10. Sound insulation arrangement in accordance with any one of Claims 1 to 9, wherein the cross sectional area at the transition of the supply air channel into the supply air chamber of the inner space is about 50% to about 250%, in particular 80% to about 150%, most preferably about 90% to about 120% of the cross sectional area of the supply air channel at its narrowest point.

11. Sound insulation arrangement in accordance with any one of Claims 1 to 10, wherein the cross section of the exhaust air channel is dimensioned such that the flow speed of the supply air, measured at the narrowest cross section of the flow path of the supply air stream from the inlet to the supply air chamber, is about 3 to about 15 m/s and/or the pressure drop along the flow path of the supply air from the inlet to the supply air chamber is limited to about 25 Pa or less.

12. Sound insulation arrangement in accordance with any one of Claims 1 to 11, wherein the cross section of the exhaust air channel is dimensioned such that the flow speed of the exhaust air at the narrowest cross section of the flow path of the exhaust air stream from the exhaust air chamber to the outlet, measured at the narrowest cross section of the flow path, is about 3 m/s to about 20 m/s.

13. Sound insulation arrangement in accordance with any one of Claims 1 to 12, wherein the housing comprises one or more doors (36a, 36b) and/or wall segments, wherein optionally one or more of the inlets and/or one or more of the outlets is/are formed in the one or more of the doors and/or the wall segments,
wherein, in particular, the doors and/or wall segments have substantially the same dimensions in height and width.

## Revendications

1. Dispositif d'insonorisation (200, 300, 350) pour le logement globalement entier d'un ou plusieurs composants d'un échangeur thermique des domaines de réfrigération et de la climatisation, dans lequel le dispositif d'insonorisation comprend un boîtier (202) fermé au niveau de son côté supérieur (204), avec un espace intérieur pour le logement du ou des composants d'échangeur thermique (18, 232, 366), dans lequel le boîtier comprend une entrée (205) pour l'arrivée d'air et une sortie (212) pour l'évacuation d'air,
dans lequel l'entrée pour l'arrivée d'air est disposée dans le tiers supérieur du boîtier et un canal d'arrivée d'air (220) comprend une portion s'étendant verticalement vers le bas,
dans lequel la sortie pour l'évacuation d'air est disposée dans le tiers supérieur du boîtier et un canal d'évacuation d'air (210, 240) comprend une portion s'étendant verticalement vers le haut,
dans lequel la sortie est disposée dans le boîtier au-dessus de l'entrée, dans lequel, dans le boîtier, est réalisé le canal d'arrivée d'air qui guide un flux d'arrivée d'air de l'entrée vers une chambre d'arrivée d'air (230) de l'espace intérieur du boîtier avec au moins un double renvoi,
dans lequel un canal d'évacuation d'air est formé dans le boîtier, lequel conduit un flux d'air d'évacuation d'une chambre d'évacuation d'air (210, 240, 360) dans l'espace intérieur du boîtier vers la sortie avec au moins une déviation,
et dans lequel la chambre d'arrivée d'air et la chambre d'évacuation d'air dans l'espace intérieur sont séparées physiquement entre elles, dans lequel la chambre d'évacuation d'air dans l'espace intérieur du boîtier est disposée au-dessus de la chambre d'arrivée d'air.

2. Dispositif d'insonorisation selon la revendication 1, dans lequel le canal d'arrivée d'air (220) et/ou la chambre d'arrivée d'air (230) présente(nt) une ou plusieurs zones de surfaces qui sont munies d'une couche d'insonorisation

3. Dispositif d'insonorisation selon la revendication 1 ou 2, dans lequel une déviation du flux d'arrivée d'air ou du flux d'évacuation d'air contient un changement de la direction de l'écoulement du flux respectif d'environ 90° ou plus.

4. Dispositif d'insonorisation selon l'une des revendications 1 à 3, dans lequel le boîtier comprend un corps de base réalisé de manière globalement parallélépipédique.

5. Dispositif d'insonorisation selon l'une des revendications 1 à 4, dans lequel le boîtier comprend une entrée avec deux ouvertures d'entrée (205a, 205b, 206a, 206b) ou plus, séparées, de préférence juxtaposées, pour l'arrivée d'air et/ou une sortie avec deux ouvertures de sortie (212, 214) ou plus, séparées, de préférence juxtaposées, pour l'évacuation de l'air,
dans lequel, en option, de chaque ouverture d'entrée du boîtier, un canal d'arrivée d'air distinct conduit à la chambre d'arrivée d'air de l'espace intérieur et/ou
dans lequel, de la chambre d'évacuation d'air (210, 240) de l'espace intérieur, à chaque ouverture de sortie du boîtier, conduit un canal d'évacuation d'air distinct et/ou
dans lequel les entrées sont disposées dans des parois latérales opposées entre elles du corps de base du boîtier réalisé de manière globalement parallélépipédique.

6. Dispositif d'insonorisation selon la revendication 5, dans lequel les sorties sont disposées dans des parois latérales opposées entre elles du corps de base du boîtier réalisé de manière globalement parallélépipédique.

7. Dispositif d'insonorisation selon l'une des revendications 4 à 6, dans lequel l'entrée et la sortie ou les entrées et les sorties sont disposées chacune dans différentes parois latérales du corps de base du boîtier réalisées de manière globalement parallélépipédique ou
dans lequel l'entrée est réalisée dans une première paroi latérale du corps de base du boîtier et dans lequel la sortie est réalisée dans une deuxième paroi latérale du corps de base du boîtier, dans lequel la deuxième paroi latérale est disposée en face de la première paroi latérale.

8. Dispositif d'insonorisation selon l'une des revendications 1 à 7, dans lequel le dispositif d'insonorisation comprend un socle pour le positionnement du ou des composants d'échangeur thermique.

9. Dispositif d'insonorisation selon l'une des revendications 1 à 8, dans lequel la chambre d'arrivée d'air et la chambre d'évacuation d'air peuvent être reliées de manière étanche à l'écoulement avec une voie d'écoulement formée dans le ou les composants d'échangeur thermique et/ou
dans lequel la section transversale d'écoulement du canal d'évacuation d'air ou des canaux d'évacuation d'air est supérieure ou égal à la section transversale d'écoulement du canal d'arrivée d'air ou des canaux d'arrivée d'air et/ou
dans lequel le canal d'arrivée d'air ou les canaux d'arrivée d'air sont de même longueur ou plus longs que le canal d'évacuation d'air ou les canaux d'évacuation d'air.

10. Dispositif d'insonorisation selon l'une des revendications 1 à 9, dans lequel la surface de section transversale au niveau de la transition entre le canal d'arrivée d'air et la chambre d'arrivée de l'espace interne représente environ 50 % à environ 250 %, plus particulièrement de 80 % à environ 150 %, de préférence d'environ 90 % à environ 120 % de la surface de section transversale du canal d'arrivée à l'endroit où il est le plus étroit.

11. Dispositif d'insonorisation selon l'une des revendications 1 à 10, dans lequel la section transversale du canal d'arrivée d'air est dimensionnée de sorte que la vitesse d'écoulement de l'air entrant au niveau de la section transversale la plus étroite de la voie d'écoulement du flux d'arrivée d'air, mesurée de l'entrée vers la chambre d'arrivée d'air représente environ 3 à environ 15 m/s et/ou la chute de pression le long de la voie d'écoulement de l'air entrant, de l'entrée jusqu'à la chambre d'arrivée d'air, est limitée à environ 25 Pa ou moins.

12. Dispositif d'insonorisation selon l'une des revendications 1 à 11, dans lequel la section transversale du canal d'évacuation d'air est dimensionnée de sorte que la vitesse d'écoulement de l'air sortant au niveau de la section transversale la plus étroite de la voie d'écoulement du flux d'arrivée d'air, de la chambre d'évacuation jusqu'à la sortie, mesurée au niveau de la section transversale la plus étroite de la voie d'écoulement, représente environ 3 m/s à environ 20 m/s.

13. Dispositif d'insonorisation selon l'une des revendications 1 à 12, dans lequel le boîtier comprend une ou plusieurs portes (36a, 36b) et/ou des segments de parois, dans lequel, en option, une ou plusieurs des entrées et/ou une ou plusieurs des sorties sont réalisées dans une ou dans plusieurs portes et/ou segments de parois,
dans lequel, plus particulièrement, les portes et/ou les segments de parois présentent globalement les mêmes dimensions en hauteur et en largeur.
